(19) Europäisches Patentamt
European Patent Office
Office européen des brevets

(11) **EP 4 135 165 B1**

(12) **EUROPEAN PATENT SPECIFICATION**

(45) Date of publication and mention
of the grant of the patent:
**31.01.2024  Bulletin 2024/05**

(21) Application number: **22190054.1**

(22) Date of filing: **11.08.2022**

(51) International Patent Classification (IPC):
*H02K 3/12* *(2006.01)*       *H02K 3/28* *(2006.01)*
*H02K 15/06* *(2006.01)*      *H02K 1/16* *(2006.01)*
*H02K 3/50* *(2006.01)*

(52) Cooperative Patent Classification (CPC):
**H02K 3/28; H02K 3/12; H02K 15/064;** H02K 1/165;
H02K 3/50; Y02T 10/64

(54) **MOTOR STATOR, MOTOR, AND VEHICLE**

MOTORSTATOR, MOTOR UND FAHRZEUG

STATOR DE MOTEUR, MOTEUR ET VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.08.2021  CN 202110919618**

(43) Date of publication of application:
**15.02.2023  Bulletin 2023/07**

(73) Proprietor: **Huawei Digital Power Technologies
Co., Ltd.
Shenzhen, 518043 (CN)**

(72) Inventors:
• **LUO, Xian
Shenzhen, 518129 (CN)**
• ZHOU, Zhao
**Shenzhen, 518129 (CN)**
• LAN, Hua
**Shenzhen, 518129 (CN)**

(74) Representative: **Gill Jennings & Every LLP
The Broadgate Tower
20 Primrose Street
London EC2A 2ES (GB)**

(56) References cited:
**CN-A- 111 181 264    CN-A- 111 555 509
CN-U- 213 585 303**

**Description**

**TECHNICAL FIELD**

This application relates to the motor field, and in particular, to a motor stator, a motor using the motor stator, and a vehicle.

**BACKGROUND**

A flat-wire motor has features of a high copper filling factor, a good heat dissipation effect, a strong voltage withstanding capability, and a high torque density and power density, and is gradually used in a field such as a new energy vehicle. An electric vehicle or a hybrid electric vehicle driven by the flat-wire motor has a lighter relative weight, longer endurance mileage, and higher internal space utilization. However, considering balance between branches, a wire winding manner of a winding in a stator of the flat-wire motor is usually complex, and a large quantity of types of U-shaped wires are used, which correspondingly improves process complexity and manufacturing costs of the flat-wire motor.

CN 111 181 264 A discloses a motor stator and a motor, the motor stator comprising: a stator core having a plurality of slots formed on a radial inner surface of the stator core and spaced apart by a predetermined slot pitch in a circumferential direction of the stator core; and a stator winding installed on the stator iron core, wherein the stator winding has three phases. The stator winding is provided with Q pole pair number coils, and Q/the number of slots per pole per phase is equal to P, P being an integer; the number of slots per pole per phase is larger than or equal to 2; and each phase stator winding is connected with each interphase stator winding in series respectively.

CN 111 555 509 A relates to the field of motors, and discloses a motor stator and a motor, the motor stator comprising: a stator core having a plurality of slots formed on a radially inner surface of the stator core and spaced apart by a predetermined slot pitch in the circumferential direction of the stator core; and a stator winding including a plurality of phase windings mounted on the stator core so as to be different from each other in electrical phase, wherein the stator winding has three phases, the slot number of each pole and each phase is Q, the phase winding has P poles, and the two branch windings in each phase winding are sequentially connected in parallel along the circumferential direction of the stator core. Document CN 213 585 303 U describes a motor stator making use of several identical U-shaped conductors.

**SUMMARY**

This application provides a motor stator, and a small quantity of U-shaped wires are used in a winding of the motor stator, thereby controlling process difficulty and manufacturing costs of the motor stator. This application further provides a motor using the motor stator, and a vehicle. This application specifically includes the following technical solutions.

According to a first aspect, this application provides a motor stator, including a stator core and a winding. The stator core is cylinder-shaped and includes an inner wall and a plurality of stator slots disposed on the inner wall. The plurality of stator slots are evenly distributed in a circumferential direction of the inner wall, and every three adjacent stator slots form a stator slot group. In a radial direction of the stator core, a plurality of wire slots are arranged in each stator slot, and radius sizes between a circle center of the stator core and the wire slots in each stator slot are different. In a circumferential direction of the stator core, wire slots with a same radius size in the stator slots form a wire slot layer.

The winding includes a three-phase winding. The three-phase winding is sequentially and alternatively wound in different stator slot groups in the circumferential direction of the stator core, and the three-phase winding is further sequentially wound in wire slot layers. Each phase winding includes at least one branch, and the at least one branch includes a plurality of U-shaped wires connected in series. Each U-shaped wire includes a bending end, and a welding end is formed between two U-shaped wires connected in series. The bending end and the welding end are alternately connected between the stator slot groups, and are also alternately connected between the wire slot layers. Ends connected between same two adjacent wire slot layers all are bending ends of the U-shaped wires or all are welding ends between the U-shaped wires. In addition, the bending ends connected between the same two adjacent wire slot layers have a same shape and a same span, and the welding ends connected between the same two adjacent wire slot layers have both a same span and a same twisting angle.

According to the motor stator in this application, the stator slot is circumferentially disposed in the core, so that the three-phase winding can be sequentially and alternatively wound. In addition, the wire slots disposed in the stator slots forms a plurality of wire slot layers, and the three-phase winding may be further wound between different wire slot layers when being wound in the circumferential direction, to improve a copper filling factor of the stator core. Specifically, each phase winding is connected between the wire slot layers and between the stator slot groups by using at least one branch. Each branch includes a plurality of U-shaped wires connected in series.

According to the motor stator in this application, a connection structure of the branch is formed by using the bending end in the U-shaped wire and the welding end connected between two adjacent U-shaped wires. In addition, U-shaped wires with a same shape and a same span or welding ends with a same span and a same twisting angle are used for connection between any two wire slot layers, so that the U-shaped wires with a same shape can be disposed between the two adjacent wire slot layers, where bending ends of the U-shaped wires have a same shape and a same span. Moreover, because the bending end and the welding end are alternately connected between the wire slot layers, welding ends may be connected between two U-shaped wires by using a same span and a same twisting angle.

Therefore, in the motor stator in this application, a quantity of U-shaped wires that are used for connection between adjacent wire slot layers depends only on a quantity of two adjacent wire slot layers that are connected by using the U-shaped wire. Compared with a wire winding manner of the winding separately connected between a plurality of wire slot layers, the motor stator in this application requires a smaller quantity of types of U-shaped wires, thereby reducing manufacturing costs of the motor stator. In addition, a decrease in the quantity of types of U-shaped wires also simplifies a wire winding process of the motor stator, thereby improving manufacturing efficiency and increasing a yield rate.

In a possible implementation, spans of bending ends that are connected between two adjacent wire slot layers each are a full pitch, and spans of welding ends that are connected between two adjacent wire slot layers each are a full pitch.

In this implementation, a span of the U-shaped wire is set to a full pitch, so that the U-shaped wire is all located in a same phase band section in a process of one-time connection in the radial direction of the stator core, thereby simplifying a wire winding process of the U-shaped wire.

In a possible implementation, the three adjacent stator slots in each stator slot group sequentially form three phase band sections. The wire slot layer includes a slot opening layer with a smallest radius size and a slot bottom layer with a largest radius size. The branch is further connected between stator slot groups in the slot opening layer, and the branch connects different phase band sections between two stator slot groups; and/or the branch is further connected between stator slot groups in the slot bottom layer, and the branch connects different phase band sections between two stator slot groups.

In this implementation, different phase band sections are separately connected in series on a same branch, so that an angle difference between different phase band sections can be eliminated, to avoid circulation interference formed between different branches.

In a possible implementation, each phase winding includes a slot change section, the slot change section is connected between the stator slot groups in the slot opening layer, and the slot change section is further connected between the stator slot groups in the slot bottom layer. The slot change section includes three paths. Each branch in the phase winding implements phase band section switching between two stator slot groups through different span combinations of the three paths.

In this implementation, the slot change section implements phase band section switching between two adjacent stator slot groups, which helps simplify a wire winding process of the slot opening layer and that of the slot bottom layer, thereby increasing a yield rate.

In a possible implementation, a span combination of the three paths in the slot change section may be 10/10/7 or may be 8/8/11.

In a possible implementation, a span combination of three paths in a slot change section located in the slot bottom layer is the same as a span combination of three paths in a slot change section located in the slot opening layer.

In this implementation, span combinations in the slot bottom layer all are set to be the same as span combinations in the slot opening layer, so that three different phase band sections are separately connected in series on a same branch, which can better eliminate an angle difference on the same branch.

In a possible implementation, the phase winding includes a first slot change wire and a second slot change wire. The first slot change wire is connected between stator slots in the slot opening layer, the second slot change wire is connected between stator slots in the slot bottom layer, and both the first slot change wire and the second slot change wire are configured to implement phase band section switching of each branch in the phase winding.

In this implementation, for any stator slot group in the slot opening layer and the slot bottom layer, the stator slot group may be separately connected to stator slot groups on two sides of the stator slot group through disposing of the first slot change wire and the second slot change wire, which improves flexibility during a same-layer band section change of the winding, thereby helping implement more wire winding manners and designs of branches connected in parallel.

In a possible implementation, first slot change wires have a same span, and/or second slot change wires have a same span.

In this implementation, the spans of the first slot change wires and/or the spans of the second slot change wires all are set to be the same, to further decrease a quantity of types of U-shaped wires used in the motor stator, thereby better control manufacturing costs of the motor stator.

In a possible implementation, a quantity of wire slot layers is an even number, and the branch is connected between different stator slots in both the slot opening layer and the slot bottom layer by using the bending end of the U-shaped wire.

Alternatively, the quantity of wire slot layers is an odd number. The branch is connected between different stator slots in the slot opening layer by using the bending end of the U-shaped wire, and the branch is connected between different stator slots in the slot bottom layer by using the welding end; or the branch is connected between different stator slots in the slot opening layer by using the welding end, and the branch is connected between different stator slots in the slot bottom layer by using the bending end of the U-shaped wire.

In this implementation, based on a difference in the quantity of wire slot layers, a structure for implementing a slot connection function in the slot opening layer and a slot bottom layer may be disposed purposefully, and the bending end or the welding end is controlled to ensure feature stability of each branch.

According to a second aspect, this application provides a motor, including a motor rotor and the motor stator provided in the first aspect of this application, where the motor rotor is located inside the motor stator.

According to a third aspect, this application provides a vehicle, including the motor provided in the second aspect of this application.

It may be understood that, the motor stator provided in the first aspect of this application is used in both the motor provided in the second aspect of this application and the vehicle provided in the third aspect of this application, so that manufacturing costs of the motor and the vehicle in this application are separately controlled, and beneficial effects respectively generated by the motor stator on the motor and the vehicle are basically the same, which are not described one by one herein.

**BRIEF DESCRIPTION OF DRAWINGS**

FIG. 1 is a schematic diagram of a frame structure of a motor according to this application;
FIG. 2 is a schematic diagram of a structure of a motor stator in a motor according to this application;
FIG. 3 is a schematic diagram of a structure of a stator core in a motor stator according to this application;
FIG. 4 is a schematic diagram of a structure of a stator slot in a motor stator according to this application;
FIG. 5 is a schematic diagram of a structure of a plurality of wire slot layers in a motor stator according to this application;
FIG. 6 is a schematic diagram of a structure of a winding in a motor stator according to this application;
FIG. 7 is a schematic diagram of a structure of a single-phase winding in a motor stator according to this application;
FIG. 8 is a schematic diagram of a phase that is of a winding in a motor stator and that is in each wire slot according to this application;
FIG. 9 is a schematic diagram of a structure of a branch in a single-phase winding in a motor stator according to this application;
FIG. 10 is a schematic diagram of a structure of a U-shaped wire on a branch in a motor stator according to this application;
FIG. 11 is a schematic diagram of a winding line that is of a branch in a motor stator and that is in each wire slot according to this application;
FIG. 12 is a schematic diagram of a winding line that is of another branch in a motor stator and that is in each wire slot according to this application;
FIG. 13 is a schematic diagram of a winding line that is of still another branch in a motor stator and that is in each wire slot according to this application;
FIG. 14 is a schematic diagram of a winding line that is of a single-phase winding in a motor stator and that is in each wire slot according to this application;
FIG. 15 is a schematic diagram of a winding line of a wire winding manner of a single-phase winding in a motor stator according to this application;
FIG. 16 is a schematic diagram of a winding line of another wire winding manner of a single-phase winding in a motor stator according to this application;
FIG. 17 is a schematic diagram of a winding line of still another wire winding manner of a single-phase winding in a motor stator according to this application;
FIG. 18 is a schematic diagram of a structure in which a single-phase winding in a motor stator is wound in an intermediate wire slot layer according to this application;
FIG. 19 is a schematic diagram of a structure in which a single-phase winding in a motor stator is wound in a slot opening layer according to this application;

FIG. 20 is a schematic diagram of a structure in which a single-phase winding in a motor stator is wound in a slot bottom layer according to this application;

FIG. 21 is a schematic diagram of a structure in which a three-phase winding in a motor stator is wound in an intermediate wire slot layer according to this application;

FIG. 22 is a schematic diagram of a structure in which a three-phase winding in a motor stator is wound in a slot opening layer according to this application;

FIG. 23 is a schematic diagram of a structure in which a three-phase winding in a motor stator is wound in a slot bottom layer according to this application;

FIG. 24 is a schematic diagram of a winding line of another wire winding manner of a single-phase winding in a motor stator according to this application;

FIG. 25 is a schematic diagram in which a star wiring manner is used when six branches are connected in parallel in a motor stator according to this application;

FIG. 26 is a schematic diagram in which a triangle wiring manner is used when six branches are connected in parallel in a motor stator according to this application;

FIG. 27 is a schematic diagram in which a star wiring manner is used when three branches are connected in parallel in a motor stator according to this application;

FIG. 28 is a schematic diagram in which a triangle wiring manner is used when three branches are connected in parallel in a motor stator according to this application;

FIG. 29 is a schematic diagram in which a star wiring manner is used when two branches are connected in parallel in a motor stator according to this application;

FIG. 30 is a schematic diagram in which a triangle wiring manner is used when two branches are connected in parallel in a motor stator according to this application;

FIG. 31 is a schematic diagram of a winding line of another wire winding manner of a single-phase winding in a motor stator according to this application;

FIG. 32 is a schematic diagram of a winding line in which a band section is changed in a same layer in a motor stator by using a slot change wire according to this application;

FIG. 33 is a schematic diagram of another winding line in which a band section is changed in a same layer in a motor stator by using a slot change wire according to this application;

FIG. 34 is a schematic diagram of another winding line in which a band section is changed in a same layer in a motor stator by using a slot change wire according to this application;

FIG. 35 is a schematic diagram of another winding line in which a band section is changed in a same layer in a motor stator by using a slot change wire according to this application;

FIG. 36 is a schematic diagram of another winding line in which a band section is changed in a same layer in a motor stator by using a slot change wire according to this application;

FIG. 37 is a schematic diagram of another winding line in which a band section is changed in a same layer in a motor stator by using a slot change wire according to this application;

FIG. 38 is a schematic diagram of another winding line in which a band section is changed in a same layer in a motor stator by using a slot change wire according to this application; and

FIG. 39 is a schematic diagram of another winding line in which a band section is changed in a same layer in a motor stator by using a slot change wire according to this application.

## DESCRIPTION OF EMBODIMENTS

The following describes technical solutions in embodiments of this application with reference to accompanying drawings in embodiments of this application. It is clear that the described embodiments are merely a part rather than all of embodiments of this application. All other embodiments obtained by a person of ordinary skill in the art based on embodiments of this application without creative efforts shall fall within the protection scope of this application.

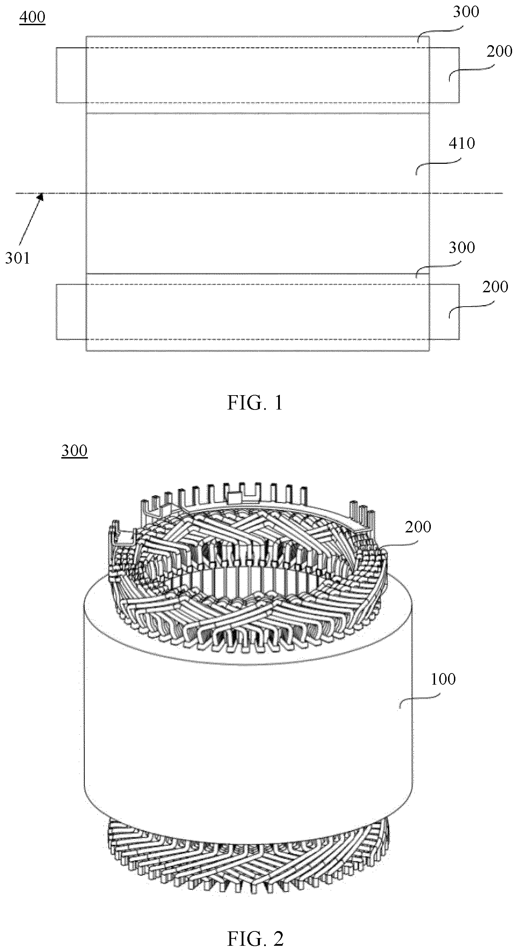

FIG. 1 illustrates a frame structure of a motor 400 according to this application.

The motor 400 includes a motor stator 300 and a motor rotor 410. The motor stator 300 is basically cylinder-shaped, and the motor rotor 410 is located inside the motor stator 300. The motor stator 300 has a geometric center axis, which is illustrated as a center axis 301 in FIG. 1. In this case, a circle center of the motor rotor 410 overlaps the center axis 301. A winding 200 is wound on the motor stator 300, and a plurality of pairs of magnetic poles (not shown in the figure) may be disposed on the motor rotor 410 corresponding to the winding 200. The magnetic pole may be a permanent magnet arranged in a circumferential direction of the motor rotor 410 or a rotor winding wound on the motor rotor 410, and the rotor winding forms conductive bars distributed in the circumferential direction of the motor rotor 410. When the winding 200 is powered on, a magnetic field is formed inside the motor stator 300. After sensing the magnetic field, the permanent magnet or the conductive bar on the motor rotor 410 can drive the motor rotor 410 to rotate around the center axis 301, to output power.

The motor 400 in this application may be applied to a vehicle in this application. The vehicle in this application may be an electric vehicle or a hybrid electric vehicle. The motor 400 may be accommodated in the vehicle and provide power for the vehicle to travel. It may be understood that an application scenario of the motor 400 in this application is not limited to a vehicle, and the motor 400 may be further applied to another device for which power output needs to be provided.

FIG. 2 illustrates a structure of the motor stator 300 according to this application.

The motor stator 300 includes a stator core 100 and a winding 200. The winding 200 is wound on the stator core 100.

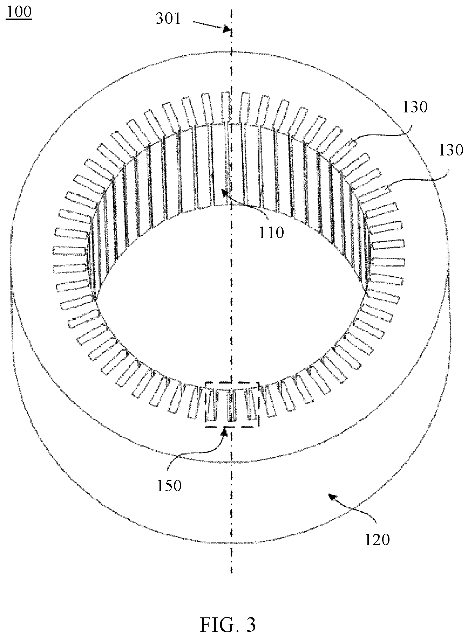

For details, refer to a structure of the stator core 100 illustrated in FIG. 3. The stator core 100 is basically cylinder-shaped and has an inner wall 110 and an outer wall 120 that are opposite to each other. The inner wall 110 and the outer wall 120 each may be cylinder-shaped. In addition, geometric centers of the inner wall 110 and the outer wall 120 overlap each other, and both surround the center axis 301.

A plurality of stator slots 130 are further disposed on the inner wall 110. The plurality of stator slots 130 are evenly distributed in a circumferential direction of the inner wall 110. The plurality of stator slots 130 further extend towards a direction of the outer wall 120 in a radial direction of the motor stator 100. In addition, in a direction of the center axis 301, each stator slot 130 penetrates through the stator core 100. The winding 200 passes through two ends of the stator slot 130 in the direction of the center axis 301 and is wound in each stator slot 130.

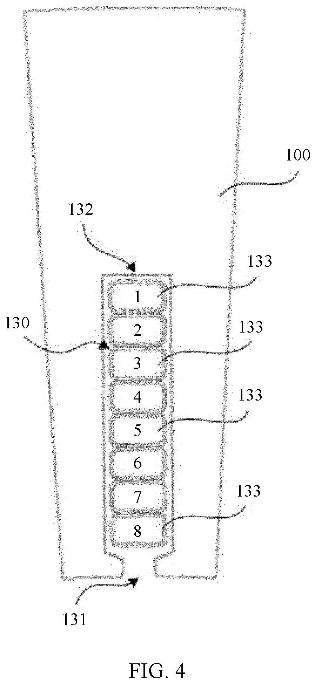

Specifically, refer to FIG. 4. In a radial direction of the stator core 100, the stator slot 130 includes a slot opening end 131 and a slot bottom end 132 that are opposite to each other. The slot opening end 131 communicates with the inner wall 110, and a gap is formed on the inner wall 110. The slot bottom end 132 is located away from the inner wall 110. Further, a plurality of wire slots 133 are disposed in the stator slot 130, and the wire slots 133 are sequentially arranged from the slot opening end 131 to the slot bottom end 132, that is, the wire slots 133 are sequentially arranged in the radial direction of the stator core 100. The winding 200 passes through the stator slot 130, and specifically, the winding passes through each wire slot 133.

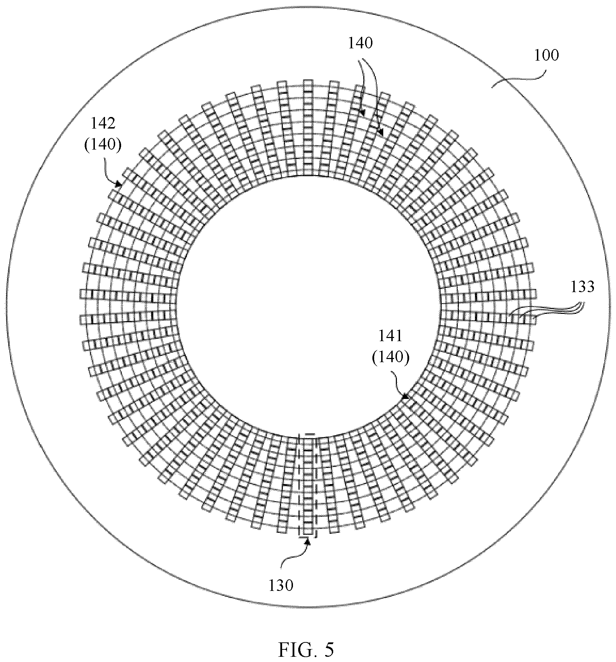

The plurality of wire slots 133 are arranged in the radial direction of the stator core 100. Distances between the center axis 301 and wire slots 133 in a same stator slot 130 are different, that is, radii of the wire slots 133 in the same stator slot 130 are different. In addition, the stator slots 130 are evenly distributed in a circumferential direction of the stator core 100, and wire slots 133 that are in the stator slots 130 and that have a same radius size form a wire slot layer 140. As illustrated in FIG. 4, a quantity of wire slots 133 in a single stator slot 130 is 8. Therefore, as shown in FIG. 5, wire slots 133 with eight different radius sizes respectively form eight wire slot layers 140 on the stator core 100. The eight wire slot layers 140 sequentially surround the stator core 100. A wire slot layer 140 formed by wire slots 133 with a smallest radius size is defined as a slot opening layer 141, and a wire slot layer 140 formed by wire slots 133 with a largest radius size is defined as a slot bottom layer 142. The slot opening layer 141 is located in an innermost ring in the wire slot layers 140 sequentially surrounding the stator core 100, and the slot bottom layer 142 is located in an outermost ring in the wire slot layers 140 sequentially surrounding the stator core 100. It may be understood that in another embodiment, as quantities of wire slots 133 in a single stator slot 130 are different, quantities of wire slot layers 140 formed in the stator core 100 are also different.

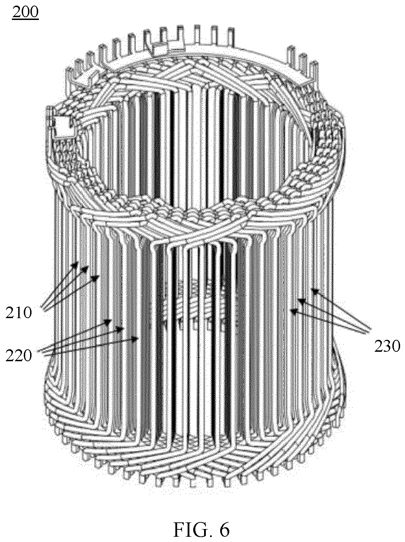

Refer to FIG. 3 again. For the motor stator 300 in this application, the following is further defined: in the circumferential direction of the stator core 100, three adjacent stator slots 130 form a stator slot group 150. As illustrated in FIG. 3, a quantity of stator slots 130 is 54, and 18 stator slot groups 150 are formed. The winding 200 of the motor stator 300 in this application is a three-phase winding. Refer to FIG. 6. The winding 200 includes a U-phase winding 210, a V-phase winding 220, and a W-phase winding 230. A quantity of slots per phase at each pole of the motor stator 300 is 3, and the three slots correspond to the three stator slots 130 in each stator slot group 150. To be specific, each phase winding simultaneously passes through three adjacent stator slots 130, and the three-phase winding is sequentially and alternatively wound in the circumferential direction of the stator core 100. Therefore, in the motor stator 100 in this embodiment, a polar distance of the motor 400 is:

$$3 \text{ (the three phases)} \times 3 \text{ (the quantity of slots per phase at each pole)} = 9.$$

To cooperate with the quantity (54) of stator slots 130, a quantity of poles of the motor rotor 410 in the motor 400 in this embodiment is 6. Certainly, for a motor in which a quantity of slots per phase at each pole is 3, a pole-slot cooperation of the motor may be 8-pole 72-slot, 10-pole 90-slot, 12-pole 108-slot, or the like. This is not limited one by one herein. Corresponding to the motor 400 with the various pole-slot cooperations, the polar distance of the motor 400 is 9, that is, a quantity of stator slots 130 between two adjacent poles is 9. In a process of winding the winding 200 on the stator core 100, a quantity of stator slots 130 passed through when the single line is connected between two wire slots 133 is a span. When the span is equal to the polar distance, the span of the single line is a full pitch; when the span is greater than the polar distance, the span of the line is a long pitch; or when the span is less than the polar distance, the span of the line is a short pitch.

It should be noted that the three phase windings shown in the figure are sequentially wound on the stator core 100 in a counter-clockwise sequence. However, in some other embodiments, the three phase windings may be sequentially wound on the stator core 100 in a clockwise sequence, which does not affect function implementation of the motor stator 300 in this application.

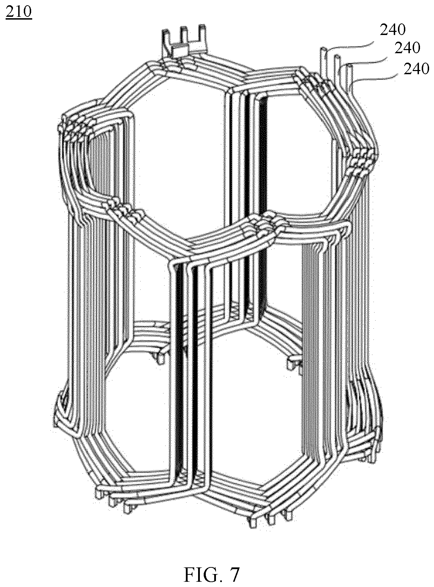

FIG. 7 illustrates a structure of a phase winding in the winding 200 by using the U-phase winding 210. The U-phase winding 210 is wound in six different stator slot groups 150 at intervals in the circumferential direction of the stator core 100. The six stator slot groups 150 are evenly distributed in the circumferential direction of the stator core 100, and distances between any two stator slot groups 150 are the same. In addition, in any of the stator slot groups 150, the U-phase winding 210 is also wound on three stator slots 130 and is also wound on the wire slots 133 in the stator slots 130. In other words, any stator slot group 150 in the stator core 100 in this application is only used to implement winding of one phase winding, and phases of windings wound on three adjacent stator slots 130 are the same.

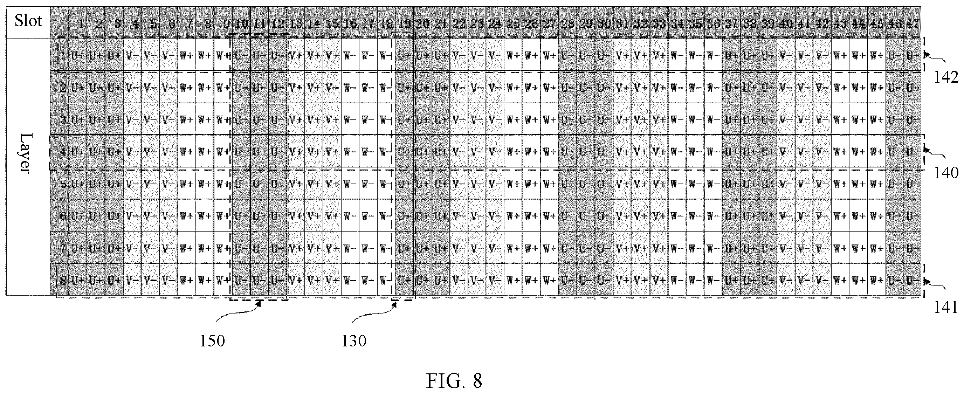

For details, refer to FIG. 8 that illustrates a phase that is of the winding 200 in the motor stator 300 and that is in each wire slot 133 according to this application. In a table in FIG. 8, a horizontal coordinate indicates arrangement of stator slots 130 that are sequentially deployed in a same rotation direction, and a vertical coordinate indicates wire slots 133 that are sequentially arranged in a length direction of the stator slot 130. It may be learned that the U-phase winding 210 shown in FIG. 7 is distributed in slots 1 to 3, slots 10 to 12, slots 19 to 21, slots 28 to 30, slots 37 to 39, and slots 46 to 48, which are six stator slot groups 150 in total. In addition, only the U-phase winding 210 is wound in each wire slot 133 in each of the stator slot groups 150.

Correspondingly, the V-phase winding 220 illustrated in FIG. 8 is distributed in slots 4 to 6, slots 13 to 15, slots 22 to 24, slots 31 to 33, slots 40 to 42, and slots 49 to 51, which are six stator slot groups 150 in total. Only the V-phase winding 220 is wound in each wire slot 133 in each of the stator slot groups 150. The W-phase winding 230 is distributed in slots 7 to 9, slots 16 to 18, slots 25 to 27, slots 34 to 36, slots 43 to 45, and slots 52 to 54, which are six stator slot groups 150 in total. Only the W-phase winding 220 is wound in each wire slot 133 in each of the stator slots 150.

Therefore, the three-phase winding is sequentially and alternatively wound in different stator slot groups 150 in the circumferential direction of the stator core 100. Each stator slot group 150 is only used for winding windings with a same phase. Two stator slot groups 150 in which windings with different phases are separately wound are disposed between two adjacent stator slot groups 150 with a same phase. For example, a stator slot group 150 (the slots 4 to 6) with the V-phase winding 220 and a stator slot group 150 (the slots 7 to 9) with the W-phase winding 230 are further disposed between two adjacent stator slot groups 150 (the slots 1 to 3 and the slots 10 to 12) with the U-phase winding 210.

It should be noted that for the stator slots 130 that are evenly circumferentially distributed, any stator slot 130 may be used as the slot 1. In other words, in the stator slots 130 in the stator core 100 that are shown in FIG. 8, the slot 1 serving as a start point may be any stator slot 130 in FIG. 3. This is not specially limited in the motor stator 300 in this application.

Further, the three stator slots 130 in a same stator slot group 150 further sequentially form three different phase band sections based on a location and angle difference between the three stator slots 130: a phase band section I, a phase band section II, and a phase band section III. The three phase band sections in the stator slot groups 150 are arranged in a same sequence. For example, in the stator slot group 150 including the slots 1 to 3, the first stator slot 130 (the slot 1) is defined as the phase band section I, the second stator slot 130 (the slot 2) is defined as the phase band section II, and the third stator slot 130 (the slot 3) is defined as the phase band section III. In other words, in the stator slot group 150 including the slots 1 to 3, a stator slot 130 close to the W-phase winding 230 is defined as the phase band section I, a stator slot 130 close to the V-phase winding 220 is defined as the phase band section III, and a stator slot 130 located between the phase band section I and the phase band section III is defined as the phase band section II.

Correspondingly, in the stator slot group 150 including the slots 10 to 12, a stator slot 130 forming the slot 10 is the phase band section I, a stator slot 130 forming the slot 11 is the phase band section II, and a stator slot 130 forming the slot 12 is the phase band section III. In addition, the V-phase winding 220 and the W-phase winding 230, the phase band sections are also arranged in a same sequence. In the stator slot group 150 including the slots 4 to 6, a stator slot 130 forming the slot 4 is the phase band section I, a stator slot 130 forming the slot 5 is the phase band section II, and a stator slot 130 forming the slot 6 is the phase band section III. In the stator slot group 150 including the slots 7 to 9, a stator slot 130 forming the slot 7 is the phase band section I, a stator slot 130 forming the slot 8 is the phase band section II, and a stator slot 130 forming the slot 9 is the phase band section III. In addition, a sequence of the three phase band sections is expanded in a counter-clockwise winding manner of the three-phase winding, and when the three-phase winding in clockwise, locations of the phase band section I and the phase band section III are correspondingly interchanged.

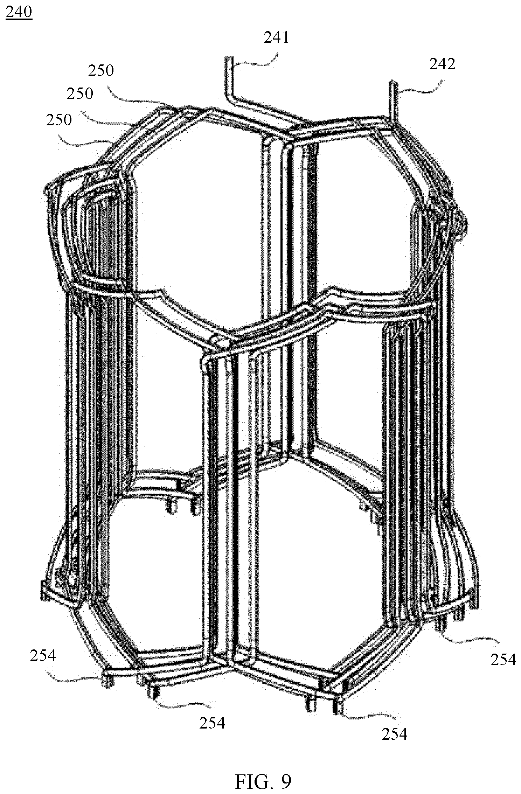

Each phase winding further includes at least one branch 240. For consideration of a motor performance parameter and an actual working condition, a quantity of branches 240 in each phase winding may be six, three, or two. Branches 240 of a same phase winding all are sequentially wound in different stator slot groups 150 with the phase winding, and the branches 240 form a phase winding after being connected in parallel. FIG. 9 illustrates a structure of a branch 240 in the U-phase winding 210, and in the embodiment of FIG. 9, the U-phase winding 210 is formed by connecting three branches 240 in parallel. Branches 240 shown in FIG. 9 all are sequentially wound in six different stator slot groups 150 with the U-phase windings 210. Each branch 240 further includes a wire inlet end 241 and a wire outlet end 242, and a plurality of U-shaped wires 250 connected in series between the wire inlet end 241 and the wire outlet end 242.

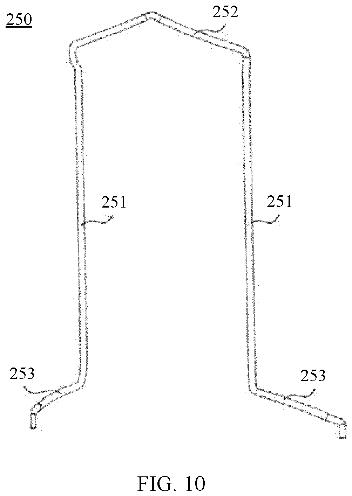

Specifically, as shown in FIG. 10, the U-shaped wire 250 includes two conductors 251 and a bending end 252 connected between the two conductors 251. The conductors 251 both are linear, and the two conductors 251 are basically parallel to each other. Each conductor 251 is inserted into a wire slot 133, and wire slots 133 into which the two conductors 251 are inserted are located in different stator slot groups 150. The bending end 252 is connected between the two conductors 251 and is configured to implement electrical conduction between the two conductors 251. A foot 253 is further extended on a side that is of each conductor 251 and that is away from the bending end 252. The foot 253 may implement serial connection between two adjacent U-shaped wires 250. Specifically, between two U-shaped wires 250 connected in series, a welding end 254 (refer to FIG. 9) is formed by welding two feet 253 that are of the two U-shaped wires 250 and that are close to each other, so that the two U-shaped wires 250 are connected in series by using the welding end 254. When the welding end 254 is connected between the two U-shaped wires 250, each of the two feet 253 forms an angle with the conductor 251 connected to the foot 253. An angle between a single foot 253 and the conductor 251 connected to the single foot 253 is defined as a twisting angle. The twisting angle may also be interpreted as a twisting angle of the welding end 254. It may be understood that, when a plurality of pairs of two adjacent U-shaped wires 250 located between same adjacent wire slot layers 140 use a same span, twisting angles formed between all the pairs of two adjacent U-shaped wires 250 are also the same. In other words, between same two adjacent wire slot layers 140, welding ends 254 with a same span all have a same twisting angle.

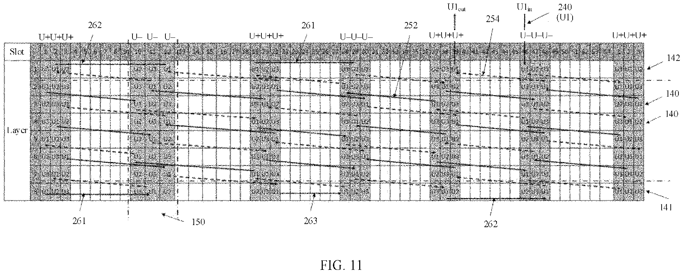

Refer to FIG. 11 that illustrates a winding line that is of the branch 240 in FIG. 9 and that is in each wire slot 133. The branch 240 enters from the 46th stator slot and the (1)st wire slot layer (which is subsequently referred to as "slot N-layer (M)" for ease of description) and exits from a slot 39-layer (1). The branch 240 sequentially passes through the following slots and layers: the slot 46-layer (1) - a slot 1-layer (2) - a slot 10-layer (3) - a slot 19-layer (4) - a slot 28-layer (5) - a slot 37-layer (6) - a slot 46-layer (7) - a slot 1-layer (8)—a slot 11-layer (8) - a slot 2-layer (7) - a slot 47-layer (6) - a slot 38-layer (5) - a slot 29-layer (4) - a slot 20-layer (3) - a slot 11-layer (2) - a slot 2-layer (1)-a slot 12-layer (1) - a slot 21-layer (2) - a slot 30-layer (3) - a slot 39-layer (4) - a slot 48-layer (5) - a slot 3-layer (6) - a slot 12-layer (7) - a slot 21-layer (8)-a slot 28-layer (8) - a slot 19-layer (7) - a slot 10-layer (6) - a slot 1-layer (5) - a slot 46-layer (4) - a slot 37-layer (3) - a slot 28-layer (2) - a slot 19-layer (1)-a slot 29-layer (1) - a slot 38-layer (2) - a slot 47-layer (3) - a slot 2-layer (4) - a slot 11-layer (5) - a slot 20-layer (6) - a slot 29-layer (7) - a slot 38-layer (8)-a slot 48-layer (8) - a slot 39-layer (7) - a slot 30-layer (6) - a slot 21-layer (5) - a slot 12-layer (4) - a slot 3-layer (3) - a slot 48-layer (2) - the slot 39-layer (1).

It may be learned that in this embodiment of this application, when the branch 240 is wound in each stator slot group 150, the branch 240 is further wound between different wire slot layers 140 in the radial direction of the stator core 100. In addition, the branch 240 is connected between two adjacent stator slot groups 150 in the circumferential direction of the stator core 100, and is also connected between two adjacent wire slot layers 140 in the radial direction of the stator core 100. As mentioned above, the two conductors 251 of the U-shaped wire 250 are configured to pass through each wire slot 133, and the bending end 252 connected between the two conductors 251 and the welding end 254 connected between two adjacent U-shaped wires 250 are configured to implement a connection action of the branch 240. In other words, the branch 240 is connected between two adjacent stator slot groups 150 and between two adjacent wire slot layers 140 by using the bending end 252 and the welding end 254. A bending end 252 is disposed on a single U-shaped wire 250, and a welding end 254 is also disposed between two U-shaped wires 250. Therefore, in this embodiment, the bending end 252 and the welding end 254 are alternately connected between conductors 251, to implement a connection function of the branch 240 between the stator slot groups 150 and between the wire slot layers 140. The welding end 254 may include feet 253 of two adjacent U-shaped wires 250 and a welding point structure formed through welding between the two feet 253.

As illustrated in FIG. 11, a solid-line arrow is used to represent the bending end 252, and a dashed-line arrow is used to represent the welding end 254. It may be learned that after the branch 240 enters the stator core 100 from the slot 46-layer (1), the first U-shaped wire 250 of the branch 240 is inserted between the slot 1-layer (2) and the slot 10-layer (3). The slot 46-layer (1) and the slot 1-layer (2) are communicated by using the welding end 254 to implement connection (herein, welding between the wire inlet end 241 of the branch 240 and the U-shaped wire 250 may also be considered as a structure of the welding end 254). Then, the slot 1-layer (2) and the slot 10-layer (3) are communicated by using the bending end 252 of the U-shaped wire 250, the slot 10-layer (3) and the slot 19-layer (4) are further communicated by using the welding end 254, and so on. In addition, in this embodiment, a span of the U-shaped wire 250 connected between two wire slot layers 140 is a full pitch 9, and a span of the welding end 254 connected between two wire slot layers 140 is also a full pitch 9.

When the branch 240 is sequentially wound between the slot 46-layer (1), the slot 1-layer (2), the slot 10-layer (3), the slot 19-layer (4), the slot 28-layer (5), the slot 37-layer (6), the slot 46-layer (7), and the slot 1-layer (8), the branch 240 is separately wound in phase band sections I of the six stator slot groups 150. When the branch 240 is sequentially wound between the slot 11-layer (8), the slot 2-layer (7), the slot 47-layer (6), the slot 38-layer (5), the slot 29-layer (4), the slot 20-layer (3), the slot 11-layer (2), and the slot 2-layer (1), and is sequentially wound between the slot 12-layer (1), the slot 21-layer (2), the slot 30-layer (3), the slot 39-layer (4), the slot 48-layer (5), the slot 3-layer (6), the slot 12-layer (7), and the slot 21-layer (8), the branch 240 is separately wound in phase band sections II and phase band sections III of the six stator slot groups 150. Subsequently, the branch 240 is also located in the phase band section I when being wound between the slot 28-layer (8) and the slot 19-layer (1); the branch 240 is located in the phase band section II when being wound between the slot 29-layer (1) and the slot 38-layer (8); and the branch 240 is located in the phase band section III when being wound between the slot 48-layer (8) and the slot 39-layer (1).

The branch 240 further separately implements phase band section conversion in the slot opening layer 141 (the eighth layer) and the slot bottom layer 142 (the first layer). Specifically, after the branch 240 is wound from the slot 46-layer (1) to the slot 1-layer (8) to complete winding between eight phase band sections I, the branch 240 is connected from the slot 1 to the slot 11 in the slot opening layer 141, where the slot 1 is located in the phase band section I, and the slot 11 is located in the phase band section II. Then, after the branch 240 is further sequentially wound from the slot 11-layer (8) to the slot 2-layer (1) to complete winding between eight phase band sections II, the branch 240 is connected from the slot 2 to the slot 12 in the slot bottom layer 142, where the slot 12 is located in the phase band section III. Further, the branch is wound from the slot 12-layer (1) to the slot 21-layer (8) to complete winding between eight phase band sections III.

As illustrated in FIG. 11, a symbol "-" is used to represent connection of the branch 240 between two adjacent wire slot layers 140, and a symbol "-" is used to represent connection of the branch 240 between different phase band sections in a same wire slot layer 140. On an entire winding line of the branch 240 shown in the figure, the branch 240 separately completes two same-layer band section changes from the phase band section I to the phase band section II (from the slot 1-layer (8) to the slot 11-layer (8) and from the slot 19-layer (1) to the slot 29-layer (1)), and two same-layer band section changes from the phase band section II to the phase band section III (from the slot 2-layer (1) to the slot 12-layer (1) and from the slot 38-layer (8) to the slot 48-layer (8)), and one same-layer band section change from the phase band section III to the phase band section I (from the slot 21-layer (8) to the slot 28-layer (8)). Therefore, on this branch 240, a total of five same-layer band section change actions are implemented between six phase band sections. The branch 240 enters from the phase band section I, sequentially connects in series the phase band section II, the phase band section III, the phase band section I, the phase band section II, and the phase band section III, and is finally guided out from the phase band section III. Quantities of phase band sections I, phase band sections II, and phase band sections III communicated by the branch 240 all are 2.

Further, for winding of the branch 240 in the phase band section I, the branch 240 is first sequentially wound from the slot opening layer 141 to the slot bottom layer 142 (from the slot 46-layer (1) to the slot 1-layer (8)), and is then sequentially wound from the slot bottom layer 142 to the slot opening layer 141 (from the slot 28-layer (8) to the slot 19-layer (1)), and connects a total of 16 wire slot layers 140. For winding of the branch 240 in the phase band section II, the branch 240 is first sequentially wound from the slot opening layer 141 to the slot bottom layer 142 (from the slot 11-layer (8) to the slot 2-layer (1)), and is then sequentially wound from the slot bottom layer 142 to the slot opening layer 141 (from the slot 29-layer (1) to the slot 38-layer (8)), and connects a total of 16 wire slot layers 140. For winding of the branch 240 in the phase band section III, the branch 240 is first sequentially wound from the slot opening layer 141 to the slot bottom layer 142 (from the slot 12-layer (1) to the slot 21-layer (8)), and is then sequentially wound from the slot bottom layer 142 to the slot opening layer 141 (from the slot 48-layer (8) to the slot 39-layer (1)), and connects a total of 16 wire slot layers 140. Line lengths of the three phase band sections in the branch 240 also are the same. In this way, the branch 240 eliminates an electrical signal angle difference that may be caused by a phase band section difference.

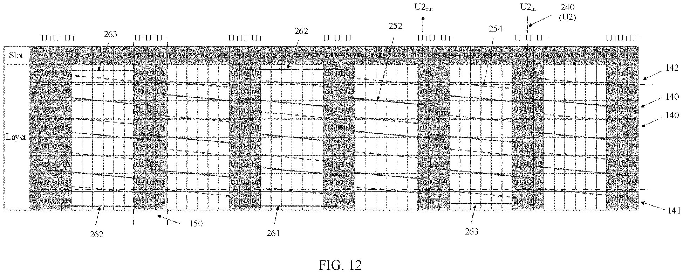

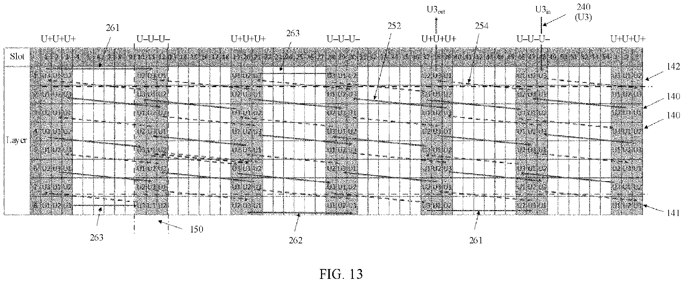

FIG. 12 and FIG. 13 respectively illustrate winding lines of the other two branches 240. The branch 240 shown in FIG. 12 enters the stator core 100 from the phase band section II and is guided out from the phase band section I. The branch 240 sequentially passes through the following slots and layers: a slot 47-layer (1) - a slot 2-layer (2) - a slot 11-layer (3) - a slot 20-layer (4) - a slot 29-layer (5) - a slot 38-layer (6) - a slot 47-layer (7) - a slot 2-layer (8)—a slot 12-layer (8) - a slot 3-layer (7) - a slot 48-layer (6) - a slot 39-layer (5) - a slot 30-layer (4) - a slot 21-layer (3) - a slot 12-layer (2) - a slot 3-layer (1)-a slot 10-layer (1) - a slot 19-layer (2) - a slot 28-layer (3) - a slot 37-layer (4) - a slot 46-layer (5) - a slot 1-layer (6) - a slot 10-layer (7) - a slot 19-layer (8)—a slot 29-layer (8) - a slot 20-layer (7) - a slot 11-layer (6) - a slot 2-layer (5) - a slot 47-layer (4) - a slot 38-layer (3) - a slot 29-layer (2) - a slot 20-layer (1)-a slot 30-layer (1) - a slot 39-layer (2) - a slot 48-layer (3) - a slot 3-layer (4) - a slot 12-layer (5) - a slot 21-layer (6) - a slot 30-layer (7) - a slot 39-layer (8)—a slot 46-layer (8) - a slot 37-layer (7) - a slot 28-layer (6) - a slot 19-layer (5) - a slot 10-layer (4) - a slot 1-layer (3) - a slot 46-layer (2) - a slot 37-layer (1).

It may be learned that when being wound between every adjacent stator slot groups 150, the branch 240 shown in FIG. 12 is also wound between two adjacent different wire slot layers 140 in the radial direction of the stator core 100. The bending end 252 and the welding end 254 of the branch 240 are also mutually alternative, and a span of the U-shaped wire 250 and a span of the welding end 254 each are a full pitch 9. Quantities of phase band sections I, phase band sections II, and phase band sections III communicated by the branch 240 shown in FIG. 12 all are 2, and line lengths of the three phase band sections are the same, thereby eliminating an electrical signal angle difference.

The branch 240 shown in FIG. 13 enters the stator core 100 from the phase band section III and is guided out from the phase band section II. The branch 240 sequentially passes through the following slots and layers: a slot 48-layer (1) - a slot 3-layer (2) - a slot 12-layer (3) - a slot 21-layer (4) - a slot 30-layer (5) - a slot 39-layer (6) - a slot 48-layer (7) - a slot 3-layer (8)-a slot 10-layer (8) - a slot 1-layer (7) - a slot 46-layer (6) - a slot 37-layer (5) - a slot 28-layer (4) - a slot 19-layer (3) - a slot 10-layer (2) - a slot 1-layer (1)-a slot 11-layer (1) - a slot 20-layer (2) - a slot 29-layer (3) - a slot 38-layer (4) - a slot 47-layer (5) - a slot 2-layer (6) - a slot 11-layer (7) - a slot 20-layer (8)-a slot 30-layer (8) - a slot 21-layer (7) - a slot 12-layer (6) - a slot 3-layer (5) - a slot 48-layer (4) - a slot 39-layer (3) - a slot 30-layer (2) - a slot 21-layer (1)-a slot 28-layer (1) - a slot 37-layer (2) - a slot 46-layer (3) - a slot 1-layer (4) - a slot 10-layer (5) - a slot 19-layer (6) - a slot 28-layer (7) - a slot 37-layer (8)-a slot 47-layer (8) - a slot 38-layer (7) - a slot 29-layer (6) - a slot 20-layer (5) - a slot 11-layer (4) - a slot 2-layer (3) - a slot 47-layer (2) - a slot 38-layer (1).

It may be learned that when being wound between every adjacent stator slot groups 150, the branch 240 shown in FIG. 13 is also wound between two adjacent different wire slot layers 140 in the radial direction of the stator core 100. The bending end 252 and the welding end 254 of the branch 240 are also mutually alternative, and a span of the U-shaped wire 250 and a span of the welding end 254 each are a full pitch 9. Quantities of phase band sections I, phase band sections II, and phase band sections III communicated by the branch 240 shown in FIG. 13 all are 2, and line lengths of the three phase band sections are the same, thereby eliminating an electrical signal angle difference.

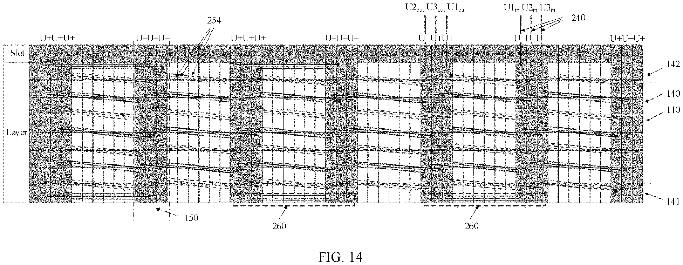

Therefore, refer to FIG. 14 that shows an overall schematic diagram in which three branches 240 of the U-phase winding 210 are wound in each stator slot group 150. For ease of description, in the accompanying drawings of this application, identifiers such as "U1", "U2", and "U3" are used for distinguishing wire slots 133 wound by a same branch 240. In a subsequent embodiment in which six branches 240 are connected in parallel, the branches 240 are distinguished by using "U1 to U6"; and in an embodiment in which two branches 240 connected in parallel, the two branches are respectively identified as "U1" and "U2". In the structure illustrated in FIG. 14, the three branches 240 are wound in each stator slot group 150 in a same manner to be connected in parallel between two adjacent stator slot groups 150 and be connected in parallel between two adjacent wire slot layers 140. In addition, connections of the three branches 240 are alternately implemented by using the bending end 252 and the welding end 254. Therefore, bending ends 252 with a same shape and a same span or welding ends 254 with a same span and a same twisting angle may be used to implement connection between any two adjacent wire slot layers 140.

Specifically, in this embodiment, the bending end 252 is configured to implement connection between the second and the third wire slot layers 140, between the fourth and the fifth wire slot layers 140, and between the sixth and the seventh wire slot layers. Radius sizes of wire slots 133 in the second wire slot layer 140 are the same, and radius sizes of wire slots 133 in the third wire slot layer 140 also are the same. Therefore, bending ends 252 with a same shape and a same span may be used for connection between the second and the third wire slot layers 140. A structure between the fourth and the fifth wire slot layers 140 and a structure between the sixth and the seventh wire slot layers 140 each are similar to the foregoing structure, and the U-phase winding 210 may also be separately connected between the fourth and the fifth wire slot layers 140 and between the sixth and the seventh wire slot layers 140 by using bending ends 252 with a same shape and a same span. Therefore, in the motor stator 300 in this application, when the U-phase winding 210 is connected between every two adjacent wire slot layers 140, only U-shaped wires 250 with three appearance structures need to be used, and a quantity of types of U-shaped wires 250 is small, thereby controlling manufacturing costs of the U-shaped wire 250.

In addition, the welding end 254 is used to implement connection between the remaining wire slot layers 140 of the motor stator 100 in this application. As illustrated in the figure, the welding end 254 is separately connected between the first and the second wire slot layers 140, between the third and the fourth wire slot layers 140, between the fifth and the sixth wire slot layers 140, and between the seventh and the eighth wire slot layers 140. Similar to the structure of the bending end 252, radius sizes of wire slots 133 in the first wire slot layer 140 are the same, and radius sizes of wire slots 133 in the second wire slot layer 140 also are the same. Therefore, welding ends 254 with a same twisting angle and a same span may be used for connection between the first and the second wire slot layers 140. Similarly, welding ends 254 with a same twisting angle and a same span may also be used for connection between the third and the fourth wire slot layers 140, between the fifth and the sixth wire slot layers 140, and between the seventh and the eighth wire slot layers 140. In the motor stator 300 in this application, when the U-phase winding 210 is connected between two adjacent wire slot layers 140, the welding end 254 of the U-phase winding 210 includes only four appearance structures. This correspondingly simplifies a welding process between U-shaped wires 250 and helps control electrical interference at a welding point, and also can control manufacturing costs of the U-shaped wire.

With reference to FIG. 8 that illustrates a schematic diagram of a phase that is of the three-phase winding and that is in each wire slot 133 of the stator core 100, because the U-phase winding 210, the V-phase winding 220, and the W-phase winding 230 are alternately wound in different stator slot groups 150, the other two phase windings in the winding 200 each may use, in six stator slot groups 150 corresponding to each of the two phase windings, a wire winding manner similar to that of the U-phase winding 210, so that three branches 240 of each of the two phase windings are also communicated by using U-shaped wires 250 with three appearance structures and by using welding ends 254 with four appearance structures, to separately wind the two phase windings in the stator core 100.

According to the foregoing disposing, when the three-phase winding of the winding 200 in the motor stator 300 in this application is connected between any two adjacent wire slot layers 140, connection between the two adjacent wire slot layers 140 can be implemented by using the bending end 252 of the U-shaped wire 250 or by using the welding end 254 between two U-shaped wires 250. In addition, bending ends 252 of U-shaped wires 250 connected between same two adjacent wire slot layers 140 have a same shape and a same span, and welding ends 254 connected between same two adjacent wire slot layers 140 have both a same span and a same twisting angle. According to this disposing, a quantity of U-shaped wires 250 in the entire motor stator 300 is small, which can control manufacturing costs of the U-shaped wire 250. In addition, a quantity of appearance structures of the welding end 254 in the entire motor stator 300 may be decreased, thereby simplifying a welding process of the winding 200, and further reducing manufacturing costs of the motor stator 300.

It may be understood that for the motor 400 that uses the motor stator 300 in this application and a vehicle that uses the motor 400 in this application, costs of the motor 400 and the vehicle are separately controlled because costs of the motor stator 300 are controlled. In another aspect, because the phase band section I, the phase band section II, and the phase band section III with a same line length are connected in series in each of the branches 240 connected in parallel in each phase winding, a difference between electrical signal angles in the branches 240 connected in parallel in the phase winding is eliminated, which can reduce circulation impact that may occur during working of the motor 400, so that a working feature of the motor stator 300 in the motor 400 is more stable, thereby ensuring reliable running of the motor 400 and the vehicle.

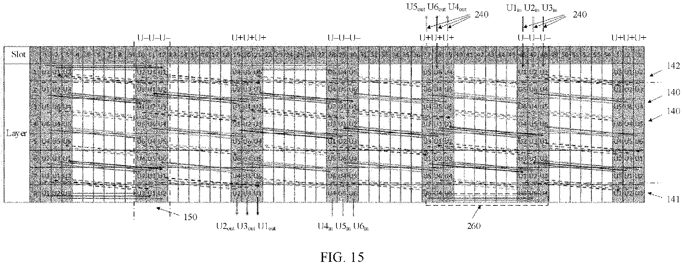

The foregoing embodiments are described based on that a quantity of branches 240 connected in parallel in each phase winding is 3. However, for the motor stator 300 in this application, when the foregoing wire winding manner is used, a quantity of branches 240 connected in parallel in the motor stator 300 is not limited to 3 and may be another value. For example, refer to FIG. 15 that illustrates a wire winding manner used when the quantity of branches 240 connected in parallel is 6. For ease of description. FIG. 15 shows only a wire winding structure of the U-phase winding 210. Specifically, the U-phase winding 210 includes six branches 240. The six branches 240 separately enter the stator core 100 from two adjacent different stator slot groups 150 (the slots 37 to 39 and the slots 46 to 48), and are guided out of the stator core 100 from two adjacent different stator slot groups 150 (the slots 19 to 2 1 and the slots 28 to 30).

Using one branch 240 as an example, the branch 240 enters from the slot 46-layer (1) and exits from the slot 21-layer (8). The branch 240 sequentially passes through the following slots and layers: the slot 46-layer (1) - the slot 1-layer (2) - the slot 10-layer (3) - the slot 19-layer (4) - the slot 28-layer (5) - the slot 37-layer (6) - the slot 46-layer (7) - the slot 1-layer (8)—the slot 11-layer (8) - the slot 2-layer (7) - the slot 47-layer (6) - the slot 38-layer (5) - the slot 29-layer (4) - the slot 20-layer (3) - the slot 11-layer (2) - the slot 2-layer (1)-the slot 12-layer (1) - the slot 21-layer (2) - the slot 30-layer (3) - the slot 39-layer (4) - the slot 48-layer (5) - the slot 3-layer (6) - the slot 12-layer (7) - the slot 21-layer (8).

When the branch 240 is between the slot 46-layer (1) and the slot 1-layer (8), the branch 240 is located in the phase band section I; when the branch 240 is between the slot 11-layer (8) and the slot 2-layer (1), the branch 240 is located in the phase band section II; and finally, when the branch 240 is between the slot 12-layer (1) and the slot 21-layer (8), the branch 240 is located in the phase band section III. In addition, in the slot opening layer 141 (the eighth layer), the branch 240 implements a same-layer band section change from the phase band section I to the phase band section II by connecting from the slot 1-layer (8) to the slot 11-layer (8); and in the slot bottom layer 142 (the first layer), the branch 240 implements a same-layer band section change from the phase band section II to the phase band section III by connecting from the slot 2-layer (1) to the slot 12-layer (1). Line lengths of the phase band sections in the branch 240 also are the same.

The two branches 240 that are wound in a stator slot group 150 the same as the branch 240 respectively enter from the slot 47-layer (1) and exit from the slot 19-layer (8), and enter from the slot 48-layer (1) and exit from the slot 20-layer (8). The two branches 240 each implement a same-layer band section change in the slot opening layer 141 and the slot bottom layer 142, and implement serial connection between three different phase band sections, where line lengths of the phase band sections are the same.

Three branches 240 located in another stator slot group 150 respectively enter from the slot 28-layer (8) and exit from the slot 39-layer (1), enter from the slot 29-layer (8) and exit from the slot 37-layer (1), and enter from the slot 30-layer (8) and exit from the slot 38-layer (1). The three branches 240 each implement a same-layer band section change in the slot opening layer 141 and the slot bottom layer 142, and implement serial connection between three different phase band sections, where line lengths of the phase band sections are the same.

In the embodiment of FIG. 15, bending ends 252 with a same shape and a same span or welding ends 254 with a same span and a same twisting angle may also be used to form connection between any two adjacent wire slot layers 140. In other words, in this embodiment, the winding 200 also uses three types of U-shaped wires 250, and the welding end 254 of the winding 200 also has four appearance structures, so that beneficial effects similar to those in the foregoing embodiment can be obtained.

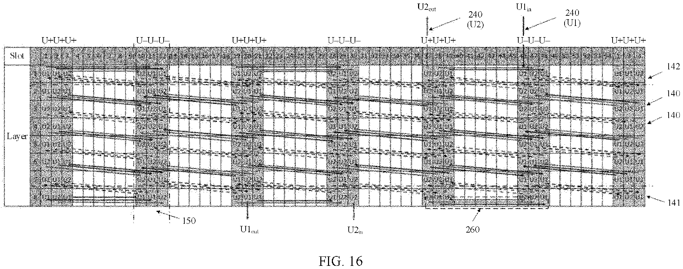

FIG. 16 illustrates a wire winding manner used when two branches are connected in parallel. For ease of description, FIG. 16 shows only a wire winding structure of the U-phase winding 210. Specifically, the U-phase winding 210 includes two branches 240. The two branches 240 separately enter the stator core 100 from different stator slots 130 and different wire slot layers 140. In addition, U-shaped wires 250 of the two branches 240 are simultaneously wound in any wire slot layer 140 of any stator slot group 150. Finally, the two branches 240 are separately guided out of the stator core 100 from different stator slots 130 and different wire slot layers 140.

Specifically, one of the two branches 240 enters from the slot 46-layer (1) and exits from the slot 20-layer (8). The branch 240 sequentially passes through the following slots and layers: the slot 46-layer (1) - the slot 1-layer (2) - the slot 10-layer (3) - the slot 19-layer (4) - the slot 28-layer (5) - the slot 37-layer (6) - the slot 46-layer (7) - the slot 1-layer (8)—the slot 11-layer (8) - the slot 2-layer (7) - the slot 47-layer (6) - the slot 38-layer (5) - the slot 29-layer (4) - the slot 20-layer (3) - the slot 11-layer (2) - the slot 2-layer (1)-the slot 12-layer (1) - the slot 21-layer (2) - the slot 30-layer (3) - the slot 39-layer (4) - the slot 48-layer (5) - the slot 3-layer (6) - the slot 12-layer (7) - the slot 21-layer (8)—the slot 28-layer (8) - the slot 19-layer (7) - the slot 10-layer (6) - the slot 1-layer (5) - the slot 46-layer (4) - the slot 37-layer (3) - the slot 28-layer (2) - the slot 19-layer (1)—the slot 29-layer (1) - the slot 38-layer (2) - the slot 47-layer (3) - the slot 2-layer (4) - the slot 11-layer (5) - the slot 20-layer (6) - the slot 29-layer (7) - the slot 38-layer (8)—the slot 48-layer (8) - the slot 39-layer (7) - the slot 30-layer (6) - the slot 21-layer (5) - the slot 12-layer (4) - the slot 3-layer (3) - the slot 48-layer (2) - the slot 39-layer (1)—the slot 48-layer (1) - the slot 3-layer (2) - the slot 12-layer (3) - the slot 21-layer (4) - the slot 30-layer (5) - the slot 39-layer (6) - the slot 48-layer (7) - the slot 3-layer (8)—the slot 10-layer (8) - the slot 1-layer (7) - the slot 46-layer (6) - the slot 37-layer (5) - the slot 28-layer (4) - the slot 19-layer (3) - the slot 10-layer (2) - the slot 1-layer (1)-the slot 11-layer (1) - the slot 20-layer (2) - the slot 29-layer (3) - the slot 38-layer (4) - the slot 47-layer (5) - the slot 2-layer (6) - the slot 11-layer (7) - the slot 20-layer (8).

The branch 240 sequentially connects in series the phase band section I, the phase band section II, the phase band section III, the phase band section I, the phase band section II, the phase band section III, the phase band section III, the phase band section I, and the phase band section II, that is, the branch 240 sequentially connects in series three phase band sections I, three phase band sections II, and three phase band sections III. Line lengths of the phase band sections communicated by the branch 240 are the same.

The other branch 240 enters from the slot 30-layer (8) and exits from the slot 37-layer (2). The branch 240 sequentially connects in series the phase band section III, the phase band section I, the phase band section II, the phase band section II, the phase band section III, the phase band section I, the phase band section II, the phase band section III, and the phase band section I, that is, the branch 240 also sequentially connects in series three phase band sections I, three phase band sections II, and three phase band sections III. Line lengths of the phase band sections communicated by the branch 240 also are the same.

In addition, each of the two branches 240 also forms a form in which the bending end 252 and the welding end 254 are alternately connected, so that bending ends 252 with a same shape and a same span or welding ends 254 with a same span and a same twisting angle are used to form connection between any two adjacent wire slot layers 140. Therefore, in this embodiment, the winding 200 also uses three types of U-shaped wires 250, and the welding end 254 of the winding 200 also has four appearance structures, so that beneficial effects similar to those in the foregoing embodiment can be obtained.

Simultaneously refer to FIG. 14, FIG. 15, and FIG. 16. Each branch 240 may change a slot in the slot opening layer 141 and the slot bottom layer 142 by disposing a slot change section 260 in each phase winding. Specifically, the slot change section 260 is located in the slot opening layer 141 and the slot bottom layer 142, and is configured to implement electrical conduction between two adjacent stator slot groups 150 and a phase band section change function between the two stator slot groups 150. The slot change section 260 includes a first path 261, a second path 262, and a third path 263. The three paths are connected between two adjacent stator slot groups 150 through different span combinations. Each path is connected between two different stator slots 130. It may be understood that the two different stator slots 130 are respectively located in two adjacent stator slot groups 150. In addition, two stator slots 130 communicated by a same path have different phase band sections.

For example, in embodiments of FIG. 14 to FIG. 16, slot change sections 260 with a same span combination are used. Spans of the first path 261 and the second path 262 both are 10, and a span of the third path 263 is 7. Two adjacent stator slot groups 150 (the slots 1 to 3 and the slots 10 to 12) in FIG. 14 are used as examples. In the slot bottom layer 142 of the two adjacent stator slot groups 150, the first path 261 is communicated between the slot 1-layer (1) and the slot 11-layer (1) and has a span of a long pitch 10, to implement a slot change between the phase band section I and the phase band section II. The second path 262 is communicated between the slot 2-layer (1) and the slot 12-layer (1) and has a span of a long pitch 10, to implement a slot change between the phase band section II and the phase band section III. The third path 263 is communicated between the slot 3-layer (1) and the slot 10-layer (1) and has a span of a long pitch 10, to implement a slot change between the phase band section III and the phase band section I.

However, in the slot opening layer 141 of the two adjacent stator slot groups 150, the first path 261 is communicated between the slot 1-layer (8) and the slot 11-layer (8) and has a span of a long pitch 10, to implement a slot change between the phase band section I and the phase band section II. The second path 262 is communicated between the slot 2-layer (8) and the slot 12-layer (8) and has a span of a long pitch 10, to implement a slot change between the phase band section II and the phase band section III. The third path 263 is communicated between the slot 3-layer (8) and the slot 10-layer (8) and has a span of a long pitch 10, to implement a slot change between the phase band section III and the phase band section I.

As illustrated in FIG. 14, the U-phase winding 210 includes three branches 240 connected in parallel, and each branch 240 connects six phase band sections in series and needs to perform a total of five same-layer band section changes. Therefore, in the embodiment of FIG. 14, the U-phase winding 210 includes five slot change sections 260, which are respectively configured to implement five same-layer band section change actions of the three branches 240. As illustrated in FIG. 15, the U-phase winding 210 includes six branches 240 connected in parallel, each branch 240 connects three phase band sections in series, and each branch 240 needs to perform two same-layer band section changes. Therefore, in the embodiment of FIG. 15, the U-phase winding 210 includes four slot change sections 260, which are respectively configured to implement two same-layer band section change actions of the six branches 240. As illustrated in FIG. 16, the U-phase winding 210 includes two branches 240 connected in parallel, and each branch 240 connects nine phase band sections in series and needs to perform a total of eight same-layer band section changes. Therefore, in the embodiment of FIG. 16, the U-phase winding 210 includes four slot change sections 260, which are respectively configured to implement six same-layer band section change actions of the two branches 240. The other two same-layer band section change actions of the two branches 240 are performed between two adjacent stator slot groups 150 that are respectively for entry and exit of the two branches 240.

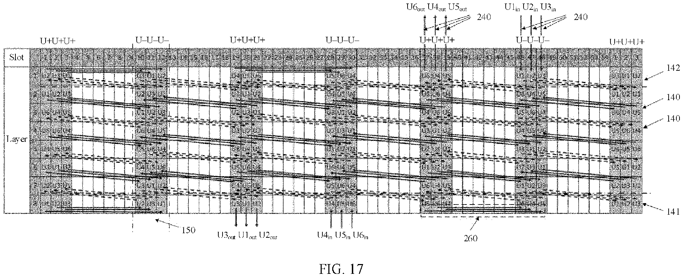

FIG. 17 illustrates another span combination form of the slot change section 260. As illustrated in FIG. 17, a span of the first path 261 is a long pitch 11, and spans of the second path 262 and the third path 263 both are 8. Similarly, two adjacent stator slot groups 150 (the slots 1 to 3 and the slots 10 to 12) are used as examples. In the slot bottom layer 142 of the two adjacent stator slot groups 150, the first path 261 is communicated between the slot 1-layer (1) and the slot 12-layer (1) and has a span of a long pitch 11, to implement a slot change between the phase band section I and the phase band section III. The second path 262 is communicated between the slot 2-layer (1) and the slot 10-layer (1) and has a span of a short pitch 8, to implement a slot change between the phase band section II and the phase band section I. The third path 263 is communicated between the slot 3-layer (1) and the slot 11-layer (1) and has a span of a short pitch 8, to implement a slot change between the phase band section III and the phase band section II.

However, in the slot opening layer 141 of the two adjacent stator slot groups 150, the first path 261 is communicated between the slot 1-layer (8) and the slot 12-layer (8) and has a span of a long pitch 11, to implement a slot change between the phase band section I and the phase band section III. The second path 262 is communicated between the slot 2-layer (8) and the slot 10-layer (8) and has a span of a short pitch 8, to implement a slot change between the phase band section II and the phase band section I. The third path 263 is communicated between the slot 3-layer (8) and the slot 11-layer (8) and has a span of a short pitch 8, to implement a slot change between the phase band section III and the phase band section II.

FIG. 17 illustrates an embodiment in which three branches 240 are connected in parallel. It may be understood that, in an embodiment in which six branches 240 are connected in parallel and an embodiment in which two branches 240 are connected in parallel, a same span combination of the slot change section 260 may also be used to implement a same-layer band section change action in each branch 240.

For the motor stator 300 in this application, when the slot change section 260 is used to implement a same-layer band section change action, span combinations between every two adjacent stator slot groups 150 of the motor stator 300 are the same. In addition, in some embodiments, slot change sections 260 with a same span combination may be further used between the slot opening layer 141 and the slot bottom layer 142, to separately implement a similar same-layer band section change action. Because slot change sections 260 located in the slot opening layer 141 have a fixed span combination, a type of the U-shaped wire 250 of each path in the slot change section 260 is also controlled, thereby decreasing a quantity of types of U-shaped wires 250 in the slot opening layer 141, and further decreasing a quantity of types of U-shaped wires 250 used in the motor stator 300. In addition, because slot change sections 260 located in the slot bottom layer 142 also have a fixed span combination, the quantity of types of U-shaped wires 250 is decreased, and the quantity of types of U-shaped wires 250 used in the motor stator 300 is controlled. In addition, when the span combination of the slot change section 260 is fixed, a welding process of each welding end 254 of the slot change section 260 is simplified. Therefore, through disposing of the slot change section 260 in the foregoing embodiment, manufacturing costs of the motor stator 300 may be further controlled.

With reference to various wire winding manners of the winding 200 that are shown in FIG. 14 to FIG. 17, it may be learned that in the motor stator 300 in this application, because quantities of branches connected in parallel are different, there is a difference between entry locations and between exit locations in the slot opening layer 141 and the slot bottom layer 142 in the embodiments, and connection locations of the slot change section 260 are also different in cooperation with this. However, an actual wire winding manner, a span, and a manner of alternatively arranging the bending end 252 and the welding end 254 of the U-shaped wire 250 all are the same between remaining wire slot layers 140 other than the slot opening layer 141 and the slot bottom layer 142. Therefore, the type of the U-shaped wire 250 and the type of the welding end 254 are controlled, thereby controlling overall manufacturing costs of the motor stator 300.

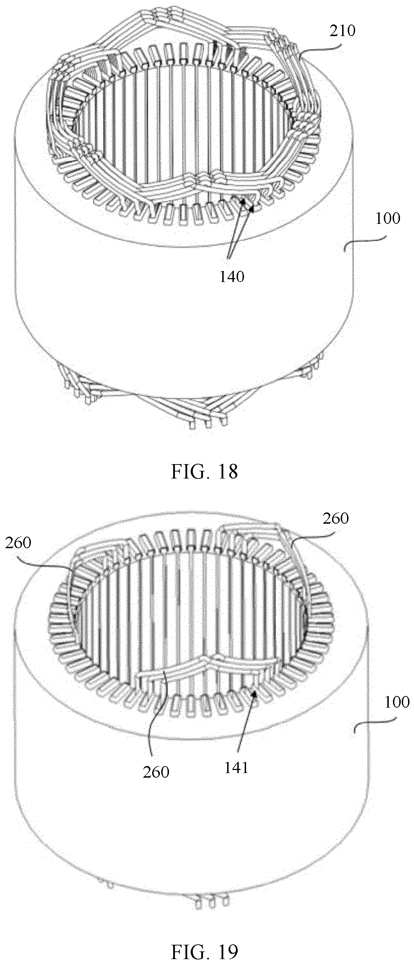

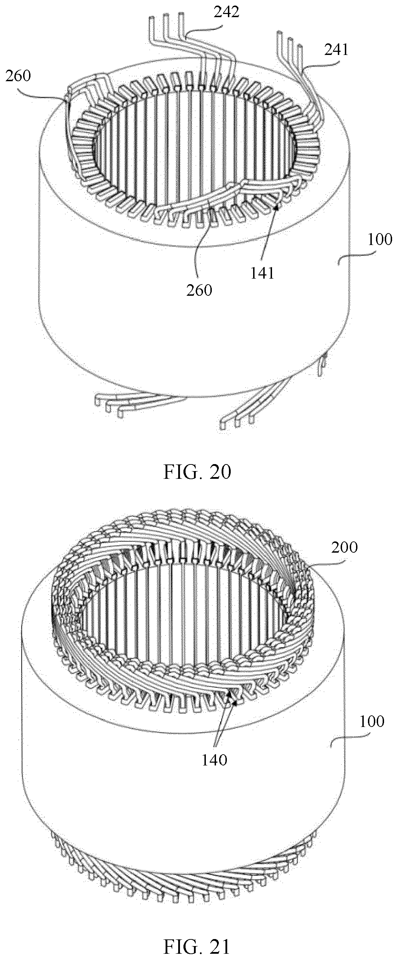

FIG. 18 illustrates a specific structure that is of winding of the U-phase winding 210 in the second to the seventh wire slot layers 140 and that corresponds to the embodiments of FIG. 14 to FIG. 17. FIG. 19 and FIG. 20 respectively correspond to specific structures of the U-phase winding 210 in the slot opening layer 141 and the slot bottom layer 142. As illustrated in FIG. 19, three slot change sections 260 are separately wound in six different stator slot groups 150 and all are located in the slot opening layer 141. However, as illustrated in FIG. 20, two slot change sections 260 are separately wound in four different stator slot groups 150, and the remaining two stator slot groups 150 are respectively configured to insert wire inlet ends 241 and wire outlet ends 242 of the three branches 240.

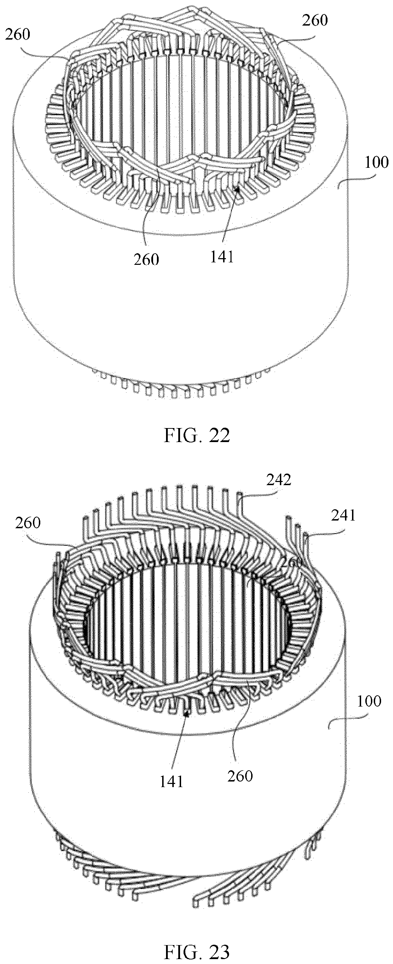

FIG. 21, FIG. 22, and FIG. 23 respectively illustrate specific structures in which the three-phase winding is simultaneously wound in the second to the seventh wire slot layers 140 and specific structures in which the three-phase winding is simultaneously located in the slot opening layer 141 and the slot bottom layer 142. Compared with the structures illustrated in FIG. 18 to FIG. 20, when the three-phase winding is simultaneously wound in the second to the seventh wire slot layers 140, the following is also formed: bending ends 252 with a same shape and a same span or welding ends 254 with a same span and a same twisting angle are used to form connection between any two adjacent wire slot layers 140. In cooperation with arrangements of the slot change sections 260 and arrangements of the wire inlet end 241 and the wire outlet end 242 in FIG. 22 and FIG. 23, a wire winding manner in which three branches 240 are connected in parallel is formed.

It may be understood that the specific structure shown in FIG. 21 is also applicable to the specific structures in the embodiments of FIG. 15 to FIG. 17, and different wire winding manners are separately formed in cooperation with the arrangement of the slot change section 260 and the arrangements of the wire inlet end 241 and the wire outlet end 242, for example, six branches 240 are connected in parallel or two branches 240 are connected in parallel. To be specific, for the motor stator 300 in this application, in a process of winding a wire on the winding 200, a winding procedure of each U-shaped wire 250 in an intermediate wire slot layer 140 (which includes the second to the seventh wire slot layers 140 in this embodiment) other than the slot opening layer 141 and the slot bottom layer 142 may be first completed; then winding procedures in the slot opening layer 141 and the slot bottom layer 142 are completed based on different use scenarios and electrical parameters; and finally, a quantity of branches connected in parallel in the motor stator 300 in this application is determined. According to the manufacturing manner in which the winding procedure in the intermediate wire slot layer 140 is pre-completed, a quantity of turns connected in series and a quantity of branches connected in parallel in the motor stator 300 in this application are set more flexibly, and an applicable scope of the motor stator 300 in this application is also extended.

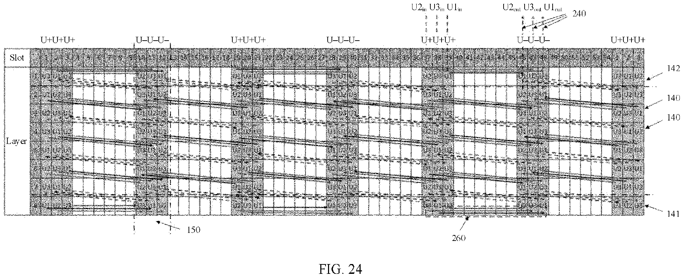

In the foregoing embodiments, the wire inlet end 241 and the wire outlet end 242 of each branch 240 both are disposed on a side close to the bending end 252. After entering the stator core 100, the wire inlet end 241 and the wire outlet end 242 first communicate with a U-shaped wire 250 by using the welding end 254, and are connected to another wire slot layer 140 by using the U-shaped wire 250. However, in a wire winding manner of the motor stator 300 in this application, locations of the wire inlet end 241 and the wire outlet end 242 are not specially limited. The wire inlet end 241 and the wire outlet end 242 may enter the stator core 100 from a side close to the welding end 254. As shown in FIG. 24, the three branches 240 of the U-phase winding 210 all enter the stator core 100 from a same stator slot group 150 (the slots 37 to 39). In addition, three wire inlet ends 241 all are located on the side close to the welding end 254, and respectively communicate with three U-shaped wires 250 in the stator slot group 150 through welding by using a welding wire. The three U-shaped wires 250 all are used as three paths in a same slot change section 260 in the slot bottom layer 142. In this way, after entering the stator core 100 near the welding end 254, the three branches 240 of the U-phase winding 210 first complete one same-layer band section change (to the slots 46 to 48), and then are sequentially wound in six different stator slot groups 150.

For example, one of the branches 240 sequentially passes through the following slots and layers: the slot 39-layer (1)—the slot 46-layer (1), the slot 1-layer (2) - the slot 10-layer (3) - the slot 19-layer (4) - the slot 28-layer (5) - the slot 37-layer (6) - the slot 46-layer (7) - the slot 1-layer (8)—the slot 11-layer (8) - the slot 2-layer (7) - the slot 47-layer (6) - the slot 38-layer (5) - the slot 29-layer (4) - the slot 20-layer (3) - the slot 11-layer (2) - the slot 2-layer (1)-the slot 12-layer (1) - the slot 21-layer (2) - the slot 30-layer (3) - the slot 39-layer (4) - the slot 48-layer (5) - the slot 3-layer (6) - the slot 12-layer (7) - the slot 21-layer (8)-the slot 28-layer (8) - the slot 19-layer (7) - the slot 10-layer (6) - the slot 1-layer (5) - the slot 46-layer (4) - the slot 37-layer (3) - the slot 28-layer (2) - the slot 19-layer (1)-the slot 29-layer (1) - the slot 38-layer (2) - the slot 47-layer (3) - the slot 2-layer (4) - the slot 11-layer (5) - the slot 20-layer (6) - the slot 29-layer (7) - the slot 38-layer (8)-the slot 48-layer (8) - the slot 39-layer (7), the slot 30-layer (6) - the slot 21-layer (5) - the slot 12-layer (4) - the slot 3-layer (3) - the slot 48-layer (2).

**EP 4 135 165 B1**

In other words, in this embodiment, because the wire inlet end 241 enters from the side close to the welding end 254, the wire outlet end 242 also needs to be guided out from the side close to the welding end 254. Therefore, the wire outlet end 242 is finally guided out from the slot 48-layer (2). In addition, in a stator slot group 150 in which the slot 48 is located, after entering the stator core 100, the slot bottom layer 142 of the stator slot group 150 is used as a location at which the three branches 240 complete one same-layer band section change by using the slot change section 260. The U-phase winding 210 is also wound in six stator slot groups 150, and passes through each wire slot 133 in the stator slot group 150, thereby ensuring a copper filling factor of the motor stator 300. Further, it may be learned from the embodiment of FIG. 24 that in this wire winding manner, bending ends 252 with a same shape and a same span or welding ends 254 with a same span and a same twisting angle may also be used to form connection between two wire slot layers 140 of a line, which can also achieve beneficial effects similar to those in the foregoing embodiment.

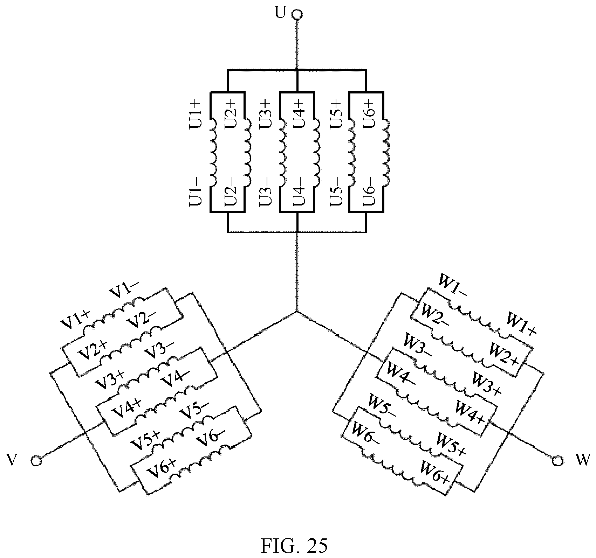

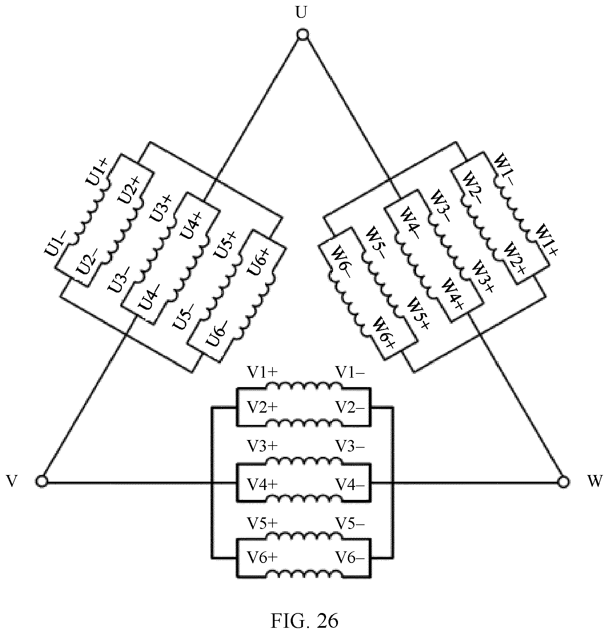

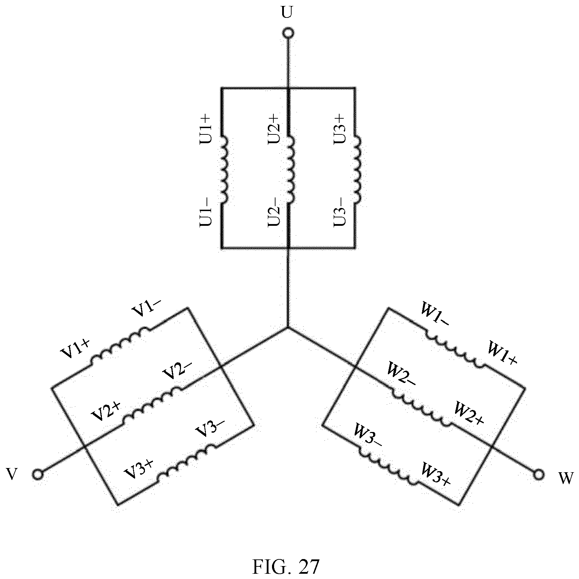

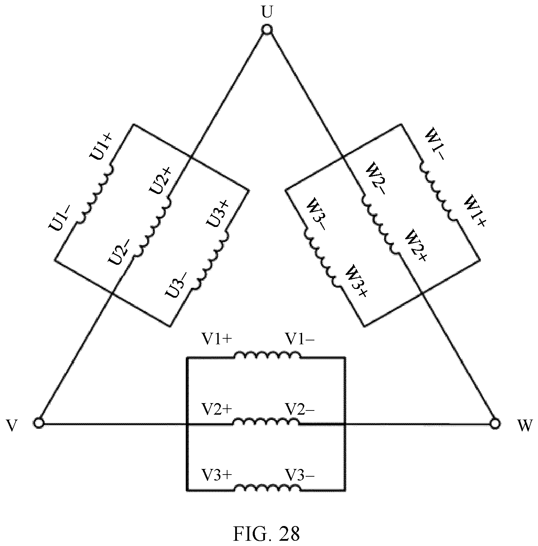

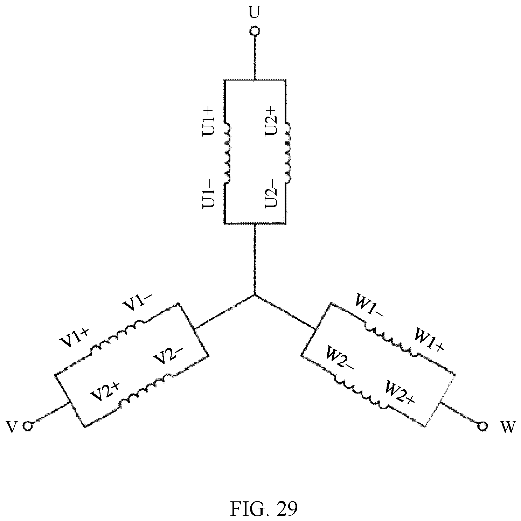

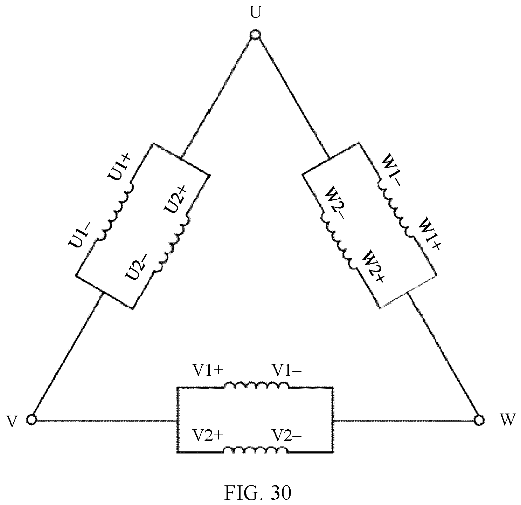

It should be noted that in the motor stator 300 in this application, a plurality of types of cooperations between a quantity of turns connected in series and a quantity of branches connected in parallel may be formed in the slot bottom layer 142 and the slot opening layer 141 by using different combinations of the slot change section 260, the wire inlet end 241, and the wire outlet end 242. In addition, the wiring manner of the motor stator 300 in this application may be randomly selected based on a working environment and an electrical parameter. FIG. 25 and FIG. 26 respectively illustrate wiring manners in which three-phase windings are connected in a star shape and a triangle shape when six branches are connected in parallel, FIG. 27 and FIG. 28 respectively illustrate wiring manners in which three-phase windings are connected in a star shape and a triangle shape when three branches are connected in parallel, and FIG. 29 and FIG. 30 respectively illustrate wiring manners in which three-phase windings are connected in a star shape and a triangle shape when two branches are connected in parallel. In this application, branches of the winding 200 all are connected in series or in parallel in the slot opening layer 141 and the slot bottom layer 142. Therefore, a wiring process of the motor stator 300 in this application is also simplified, and a wiring manner may be randomly set based on an actual working environment and an electrical parameter.

All the foregoing embodiments are described by using an example in which a quantity of wire slot layers 140 is 8, and there are six intermediate wire slot layers 140 other than the slot opening layer 141 and the slot bottom layer 142. However, the quantity of wire slot layers 140 is not strictly limited in the motor stator 300 in this application, and the quantity of wire slot layers 140 may be 3 or any other value greater than 3. For example, the quantity of wire slot layers 140 is 7, 10, or 12. The winding 200 may be disposed in the foregoing wire winding manner in all these cases, thereby decreasing a quantity of types of U-shaped wires 250 and controlling manufacturing costs of the motor stator 300.

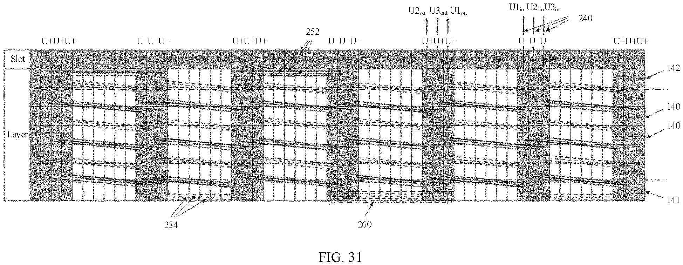

FIG. 31 illustrates a winding line of the U-phase winding 210 in each wire slot layer 140 when the quantity of wire slot layers 140 is 7. In this embodiment, the U-phase winding 210 is wound by connecting three branches 240 in parallel. One of the branches 240 enters from the slot 46-layer (1) and exits from the slot 39-layer (1). The branch 240 sequentially passes through the following slots and layers: the slot 46-layer (1) - the slot 1-layer (2) - the slot 10-layer (3) - the slot 19-layer (4) - the slot 28-layer (5) - the slot 37-layer (6) - the slot 46-layer (7)-the slot 2-layer (7) - the slot 47-layer (6) - the slot 38-layer (5) - the slot 29-layer (4) - the slot 20-layer (3) - the slot 11-layer (2) - the slot 2-layer (1)-the slot 12-layer (1) - the slot 21-layer (2) - the slot 30-layer (3) - the slot 39-layer (4) - the slot 48-layer (5) - the slot 3-layer (6) - the slot 12-layer (7)-the slot 19-layer (7) - the slot 10-layer (6) - the slot 1-layer (5) - the slot 46-layer (4) - the slot 37-layer (3) - the slot 28-layer (2) - the slot 19-layer (1)-the slot 29-layer (1) - the slot 38-layer (2) - the slot 47-layer (3) - the slot 2-layer (4) - the slot 11-layer (5) - the slot 20-layer (6) - the slot 29-layer (7)-the slot 39-layer (7) - the slot 30-layer (6) - the slot 21-layer (5) - the slot 12-layer (4) - the slot 3-layer (3) - the slot 48-layer (2) - the slot 39-layer (1).

It may be learned that in this embodiment, because the quantity of wire slot layers 140 is an odd number, three different types of U-shaped wires 250 are respectively connected between the second and the third wire slot layers 140, between the fourth and the fifth wire slot layers 140, and between the sixth and the seventh wire slot layers 140. In addition, the seventh wire slot layer 140 is also used as the slot opening layer 141 in this embodiment of this application. Therefore, a structure for implementing a same-layer band section change in the slot opening layer 141 needs to be a structure of the welding end 254. However, a structure for implementing a same-layer band section change in the slot bottom layer 142 is a structure of the bending end 252. In addition, in this embodiment, the slot change section 260 is also used to perform the same-layer band section change. Therefore, in this embodiment, for the slot change section 260 that is located in the slot bottom layer 142 and that implements the same-layer band section change, three paths of the slot change section 260 each may include the U-shaped wire 250. However, for the slot change section 260 that is located in the slot opening layer 141 and that implements the same-layer band section change, three paths of the slot change section 260 each may include the welding end 254.

On the contrary, when three different types of U-shaped wires 250 are respectively connected between the first and the second wire slot layers 140, between the third and the fourth wire slot layers 140, and between the fifth and sixth wire slot layers 140, in this embodiment of this application, in the slot bottom layer 142, the same-layer band section change needs to be completed by using the welding end 254, and in the slot opening layer 141, the same-layer band section change needs to be completed by using the U-shaped wire 250. Alternatively, this is described as follows: When the quantity of wire slot layers 140 is an odd number, each branch 240 is connected between different stator slots 130 in the slot opening layer 141 by using the bending end 252 of the U-shaped wire 250, and is connected between different stator slots 130 in the slot bottom layer 142 by using the welding end 254; or the branch 240 is connected between different stator slots 130 in the slot opening layer 141 by using the welding end 254, and is connected between different stator slots 130 in the slot bottom layer 142 by using the bending end 252 of the U-shaped wire 250.

In an embodiment in which the quantity of wire slot layers 140 is an even number, the U-shaped wire 250 may be used to implement the same-layer band section change in both the slot opening layer 141 and the slot bottom layer 142 of the wire slot layer 140. Because a span combination of each slot change section 260 is fixed, when the U-shaped wire 250 is used to construct the slot change section 260, a quantity of types of U-shaped wires 250 is also controlled while stability of an electrical parameter is ensured.

In an embodiment, the same-layer band section change may be implemented in the slot opening layer 141 and the slot bottom layer 142 by using a slot change wire. The three stator slots 130 in a same stator slot group 150 are separately connected to different stator slot groups 150 by using the slot change wire, which can also implement a same-layer band section change function. Specifically, a first slot change wire 271 is disposed in the slot opening layer 141, and a second slot change wire 272 is disposed in the slot bottom layer 142. The first slot change wire 271 is in a stator slot group 150 in the slot opening layer 141 and is separately connected to two adjacent stator slot groups 150 before and after the stator slot group 150, to implement the same-layer band section change function. The second slot change wire 272 is in a stator slot group 150 in the slot bottom layer 142 and is separately connected to two adjacent stator slot groups 150 before and after the stator slot group 150, to implement the same-layer band section change function. The first slot change wire 271 cooperates with the second slot change wire 272 to implement phase band section switching actions on branches connected in parallel in a same phase winding.

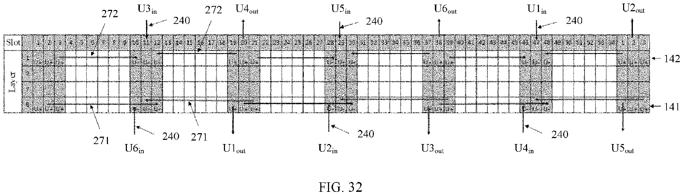

For details, refer to FIG. 32 that illustrates wire winding that is of six branches 240 connected in parallel and that is in eight wire slot layers 140. In addition, for ease of description, FIG. 32 omits structures of some intermediate wire slot layers 140 (the third to the sixth layer), and only shows structures of the first layer (the slot bottom layer 142), the second layer, the seventh layer, and the eighth layer (the slot opening layer 141), which are four wire slot layers 140 in total. As illustrated in FIG. 32, the six branches 240 connected in parallel separately enter the stator core 100 from different stator slot groups 150, and then are guided out from different stator slot groups 150. Specifically, one of the branches 240 enters the stator core 100 from the slot 47-layer (1). The branch 240 is located in the phase band section II when entering the stator core 100, and is sequentially wound to the slot 2-layer (8) to reach the slot opening layer 141. Then, the branch 240 is connected from the slot 2-layer (8) to the slot 12-layer (8) by using the first slot change wire 271, where a span is a long pitch 10, to implement a same-layer band section change from the phase band section II to the phase band section III. Afterwards, the branch 240 is further sequentially wound to the slot 3-layer (1) to reach the slot bottom layer 142, and is connected from the slot 3-layer (1) to the slot 10-layer (1) by using the second slot change wire 272, where a span is a short pitch 7, to implement a same-layer band section change from the phase band section III to the phase band section I. Therefore, through cooperation between the first slot change wire 271 and the second slot change wire 272, the branch 240 sequentially connects three phase band sections in series, and is finally guided out from the slot 19-layer (8).

For a band section change action of the branch 240 in the slot opening layer 141, the branch 240 is connected from the slot 2-layer (8) to the slot 12-layer (8), which may be understood as that the first slot change wire 271 is connected from a stator slot group 150 (the slots 1 to 3) in which the slot 2 is located to a stator slot group 150 (the slots 10 to 12) in which the slot 12 is located. In addition, the first slot change wire 271 is further connected from the stator slot group 150 (the slots 1 to 3) in which the slot 2 is located to a stator slot group 150 (the slots 46 to 48) in which the slot 47 is located. In other words, the first slot change wire 271 is connected to two adjacent stator slot groups 150 (which are respectively the slots 10 to 12 and the slots 46 to 48) before and after the stator slot group 150, to separately implement the same-layer band section change function. Moreover, in this embodiment, first slot change wires 271 all have a span of 10, and are configured to implement an action of a band section change of each branch 240 from the phase band section II to the phase band section III.

For a band section change action of the branch 240 in the slot bottom layer 142, the branch 240 is connected from the slot 3-layer (1) to the slot 10-layer (1), which may be understood as that the second slot change wire 272 is connected from a stator slot group 150 (the slots 1 to 3) in which the slot 3 is located to a stator slot group 150 (the slots 10 to 12) in which the slot 10 is located. In addition, the second slot change wire 272 is further connected from the stator slot group 150 (the slots 1 to 3) in which the slot 3 is located to a stator slot group 150 (the slots 46 to 48) in which the slot 48 is located. In other words, the second slot change wire 272 is connected to two adjacent stator slot groups 150 (which are respectively the slots 10 to 12 and the slots 46 to 48) before and after the stator slot group 150, to separately implement the same-layer band section change function. Moreover, in this embodiment, second slot change wires 272 all have a span of 7, and are configured to implement an action of a band section change of each branch 240 from the phase band section I to the phase band section III.

Therefore, in the embodiment shown in FIG. 32, through cooperation between the first slot change wire 271 and the second slot change wire 272, same-layer band section change actions of each branch 240 in the slot opening layer 141 and the slot bottom layer 142 are separately implemented. In addition, the spans of the first slot change wires 271 are the same, and the spans of the second slot change wires 272 also are the same. For the motor stator 300 with eight wire slot layers 140, only five different types of U-shaped wires 250 are required to complete winding of the entire winding 200 on the stator core 100, which can effectively avoid a case such as circulation occurring in the winding 200, thereby ensuring reliable running of the motor stator 300. In this embodiment, manufacturing costs of the motor stator 300 may also be reduced.

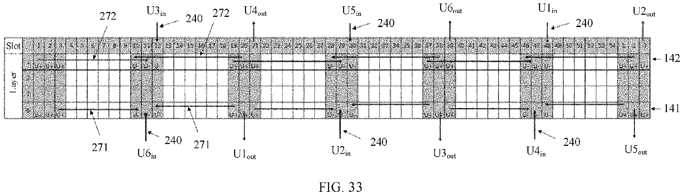

For another embodiment, refer to FIG. 33. A quantity of branches connected in parallel, an entry manner, an exit manner, and the like in this embodiment all are the same as those in the embodiment of FIG. 32, and only spans of the first slot change wire 271 and the second slot change wire 272 are interchanged, so that the span of the first slot change wire 271 is a short pitch 7, and the span of the second slot change wire 272 is a long pitch 10, which can also achieve beneficial effects similar to those in the embodiment of FIG. 32. In this embodiment, a branch 240 that enters from the stator slot group 150 including the slots 46 to 48 specifically enters the stator slot group 150 from the slot 48-layer (1), and the branch 240 is located in the phase band section III when entering the stator core 100, and is then sequentially wound to the slot 3-layer (8) to reach the slot opening layer 141. The branch 240 is connected from the slot 3-layer (8) to the slot 10-layer (8) by using the first slot change wire 271, where a span is a short pitch 7, to implement a same-layer band section change from the phase band section III to the phase band section I. Afterwards, the branch 240 is further sequentially wound to the slot 1-layer (1) to reach the slot bottom layer 142, and is connected from the slot 1-layer (1) to the slot 11-layer (1) by using the second slot change wire 272, where a span is a long pitch 10, to implement a same-layer band section change from the phase band section I to the phase band section II. Therefore, through cooperation between the first slot change wire 271 and the second slot change wire 272, the branch 240 sequentially connects three phase band sections in series, and is finally guided out from the slot 20-layer (8).

It may be learned that in the embodiment of FIG. 33, spans of first slot change wires 271 and spans of second slot change wires 272 are respectively the same, which also decreases a quantity of types of U-shaped wires 250 in the motor stator 300.

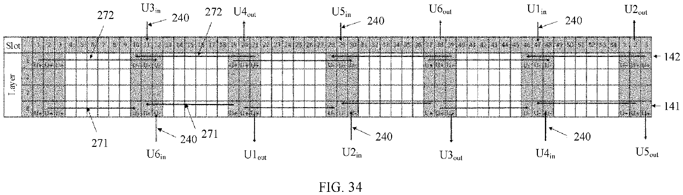

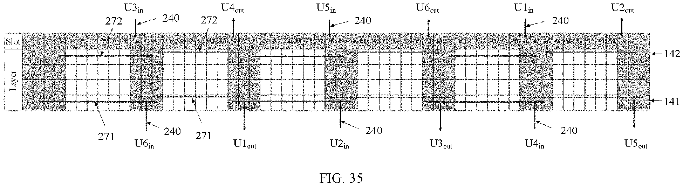

For similar wire winding manners, refer to FIG. 34 and FIG. 35. In the wire winding manner in FIG. 34, first slot change wires 271 all have a span of 8, and are configured to implement a same-layer band section change from the phase band section II to the phase band section I in the slot opening layer 141. Second slot change wires 272 all have a span of 11, and are configured to implement a same-layer band section change from the phase band section I to the phase band section III in the slot bottom layer 142. However, in the wire winding manner in FIG. 35, first slot change wires 271 all have a span of 11, and are configured to implement a same-layer band section change from the phase band section I to the phase band section III in the slot opening layer 141. Second slot change wires 272 all have a span of 8, and are configured to implement a same-layer band section change from the phase band section III to the phase band section II in the slot bottom layer 142.

It may be learned that in the embodiments of FIG. 34 and FIG. 35, the spans of the first slot change wires 271 and the spans of the second slot change wires 272 are respectively the same, which also decreases a quantity of types of U-shaped wires 250 in the motor stator 300.

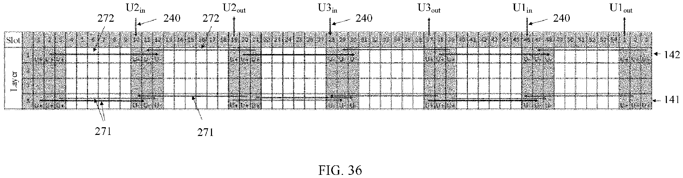

Refer to an embodiment of FIG. 36. When three branches are connected in parallel in a same phase winding, same-layer band section change actions in the slot opening layer 141 and the slot bottom layer 142 may also be implemented through cooperation between the first slot change wire 271 and the second slot change wire 272. For example, one branch 240 shown in FIG. 36 enters the stator core 100 from the slot 46-layer (1). The branch 240 is located in the phase band section I when entering the stator core 100, and is sequentially wound to the slot 1-layer (8) to reach the slot opening layer 141. Then, the branch 240 is connected from the slot 1-layer (8) to the slot 11-layer (8) by using the first slot change wire 271, where a span is a long pitch 10, to implement a same-layer band section change from the phase band section I to the phase band section II. Afterwards, the branch 240 is further sequentially wound to the slot 2-layer (1) to reach the slot bottom layer 142, and is connected from the slot 2-layer (1) to the slot 12-layer (1) by using the second slot change wire 272, where a span is a long pitch 10, to implement a same-layer band section change from the phase band section II to the phase band section III. Then, the branch 240 is further sequentially wound to the slot 21-layer (8), and is connected to the slot 30-layer (8) by using the first slot change wire 271, where a span is a full pitch 9, and the branch 240 is still located in the phase band section III. Further, the branch 240 is sequentially wound to the slot 21-layer (1), and is connected to the slot 11-layer (1) by using the second slot change wire 272, where a span is a long pitch 10, to implement a same-layer band section change from the phase band section III to the phase band section II. Then, the branch 240 is sequentially wound to the slot 20-layer (8), and is connected to the slot 10-layer (1) by using the first slot change wire 271, where a span is a long pitch 10, to implement a same-layer band section change from the phase band section II to the phase band section I. Finally, the branch 240 is guided out from the slot 1-layer (1).

In this embodiment, the spans of the second slot change wires 272 each are a long pitch 10, and the spans of the first slot change wires 271 include a long pitch 10 and a full pitch 9. Through cooperation between the first slot change wire 271 and the second slot change wire 272, the branch 240 completes an action of sequentially connecting three phase band sections in series two times, and in a winding process of connecting three branches 240 in parallel, a quantity of types of U-shaped wires 250 in the motor stator 300 may be controlled to be six, which can also reduce manufacturing costs of the motor stator 300.

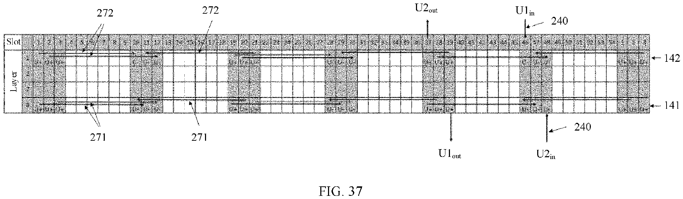

FIG. 37 further illustrates an embodiment in which same-layer band section change actions in the slot opening layer 141 and the slot bottom layer 142 are implemented by using the first slot change wire 271 and the second slot change wire 272 when two branches are connected in parallel. In this embodiment, there are two types of first slot change wires 271, including a long pitch 10 and a full pitch 9, and there are also two types of second slot change wires 272, including a long pitch 10 and a full pitch 9. The first slot change wire 271 whose span is a long pitch 10 may be configured to implement a same-layer band section change from the phase band section II to the phase band section III, and the second slot change wire 272 whose span is a long pitch 10 is configured to implement a same-layer band section change from the phase band section I to the phase band section II. The first slot change wire 271 and the second slot change wire 272 whose spans each are a full pitch 9 are configured to implement a slot change action between same phase band sections in a same layer. Therefore, through cooperation between the first slot change wire 271 and the second slot change wire 272, two branches each implements an action of sequentially connecting three phase band sections in series three times, and a quantity types of U-shaped wires 250 in the motor stator 300 is controlled to be seven, thereby reducing manufacturing costs of the motor stator 300.

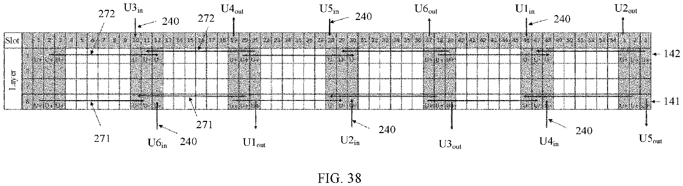

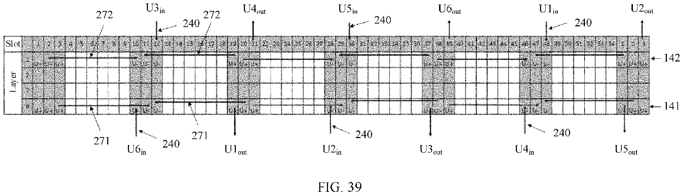

In an embodiment, refer to FIG. 38 and FIG. 39. The spans of the first slot change wires 271 and the second slot change wire 272 may be set to a same long pitch 10 or a same short pitch 8, and the first slot change wire 271 and the second slot change wire 272 cooperate with each other to implement their respective same-layer band section change actions in the slot opening layer 141 and the slot bottom layer 142. As illustrated in FIG. 38, the first slot change wire 271 whose span is a long pitch 10 in the slot opening layer 141 may be configured to implement an action of a same-layer band section change from the phase band section I to the phase band section II, and the second slot change wire 272 whose span is a long pitch 10 in the slot bottom layer 142 is configured to implement an action of a same-layer band section change from the phase band section II to the phase band section III. Through cooperation between the first slot change wire 271 and the second slot change wire 272, each branch 240 sequentially connects three phase band sections in series, which also decreases a quantity of types of U-shaped wires 250 in the motor stator 300.

As illustrated in FIG. 39, the first slot change wire 271 whose span is a short pitch 8 in the slot opening layer 141 may be configured to implement an action of a same-layer band section change from the phase band section II to the phase band section III, and the second slot change wire 272 whose span is a short pitch 8 in the slot bottom layer 142 is configured to implement an action of a same-layer band section change from the phase band section III to the phase band section I. Through cooperation between the first slot change wire 271 and the second slot change wire 272, each branch 240 also sequentially connects three phase band sections in series, which also decreases a quantity of types of U-shaped wires 250 in the motor stator 300.The foregoing descriptions are merely specific embodiments of this application, but are not intended to limit the protection scope of this application. Variation or replacement readily figured out by a person skilled in the art within the technical scope disclosed in this application, for example, reducing or adding a mechanical part, or changing a shape of a mechanical part, shall fall within the protection scope of this application. Embodiments of this application and features in the embodiments may be mutually combined provided that no conflict occurs. Therefore, the protection scope of this application shall be subject to the protection scope of the claims.

**Claims**

1.   A motor stator (300), comprising a stator core (100) and a winding (200), wherein

the stator core is cylinder-shaped and comprises an inner wall (110) and a plurality of stator slots (130) disposed on the inner wall, the plurality of stator slots are evenly distributed in a circumferential direction of the inner wall, and every three adjacent stator slots form a stator slot group (150);
in a radial direction of the stator core, a plurality of wire slots (133) are arranged in each stator slot, and radius sizes between a circle center of the stator core and the wire slots in each stator slot are different; and in a circumferential direction of the stator core, wire slots with a same radius size in the stator slots form a wire slot layer (140);
the winding comprises a three-phase winding, the three-phase winding is sequentially and alternatively wound in different stator slot groups in the circumferential direction of the stator core, and the three-phase winding is further sequentially wound in wire slot layers; and each phase winding comprises at least one branch (240),
the at least one branch comprises a plurality of U-shaped wires (250) connected in series, each U-shaped wire comprises a bending end (252), a welding end (254) is formed between two U-shaped wires connected in series, and the bending end and the welding end are alternately connected between the stator slot groups, and are also alternately connected between the wire slot layers; and

ends connected between same two adjacent wire slot layers all are bending ends of the U-shaped wires or all are welding ends between the U-shaped wires, and **characterized in that**

the bending ends connected between the same two adjacent wire slot layers have a same shape and a same span, and the welding ends connected between the same two adjacent wire slot layers have both a same span and a same twisting angle.

2. The motor stator according to claim 1, wherein spans of bending ends that are connected between two adjacent wire slot layers each are a full pitch, and spans of welding ends that are connected between two adjacent wire slot layers each are a full pitch.

3. The motor stator according to claim 1 or 2, wherein the three adjacent stator slots in each stator slot group sequentially form three phase band sections; the wire slot layer comprises a slot opening layer with a smallest radius size and a slot bottom layer with a largest radius size; and the branch is further connected between stator slot groups in the slot opening layer, and the branch connects different phase band sections between two stator slot groups, and/or the branch is further connected between stator slot groups in the slot bottom layer, and the branch connects different phase band sections between two stator slot groups.

4. The motor stator according to claim 3, wherein each phase winding comprises a slot change section, the slot change section is connected between the stator slot groups in the slot opening layer, and the slot change section is further connected between the stator slot groups in the slot bottom layer; and

the slot change section comprises three paths, and each branch in the phase winding implements phase band section switching between two stator slot groups through different span combinations of the three paths.

5. The motor stator according to claim 4, wherein a span combination of the three paths in the slot change section is 10/10/7 or 8/8/11.

6. The motor stator according to claim 4 or 5, wherein a span combination of three paths in a slot change section located in the slot bottom layer is the same as a span combination of three paths in a slot change section located in the slot opening layer.

7. The motor stator according to claim 3, the phase winding comprises a first slot change wire and a second slot change wire, the first slot change wire is connected between stator slots in the slot opening layer, the second slot change wire is connected between stator slots in the slot bottom layer, and both the first slot change wire and the second slot change wire are configured to implement phase band section switching of each branch in the phase winding.

8. The motor stator according to claim 7, wherein first slot change wires have a same span, and/or second slot change wires have a same span.

9. The motor stator according to any one of claims 3 to 8, wherein a quantity of wire slot layers is an even number, and the branch is connected between different stator slots in both the slot opening layer and the slot bottom layer by using the bending end of the U-shaped wire; or

the quantity of wire slot layers is an odd number, the branch is connected between different stator slots in the slot opening layer by using the bending end of the U-shaped wire, and the branch is connected between different stator slots in the slot bottom layer by using the welding end; or the branch is connected between different stator slots in the slot opening layer by using the welding end, and the branch is connected between different stator slots in the slot bottom layer by using the bending end of the U-shaped wire.

10. A motor (400), comprising a motor rotor (410) and the motor stator (300) according to any one of claims 1 to 9, wherein the motor rotor is located on an inner side of the motor stator.

11. A vehicle comprising the motor (400) according to claim 10.


**Patentansprüche**

1. Motorstator (300), umfassend einen Statorkern (100) und eine Wicklung (200), wobei

der Statorkern zylinderförmig ist und eine Innenwand (110) und eine Vielzahl an der Innenwand angeordnete Statornuten (130) umfasst, wobei die Vielzahl von Statornuten in einer Umfangsrichtung der Innenwand gleichmäßig verteilt ist und drei benachbarte Statornuten jeweils eine Statornutgruppe (150) bilden;

in einer radialen Richtung des Statorkerns in jeder der Statornuten eine Vielzahl von Drahtschlitzen (133) angeordnet ist und die Radiusgrößen zwischen einem Kreismittelpunkt des Statorkerns und den Drahtschlitzen in jeder der Statornuten unterschiedlich sind; und in einer Umfangsrichtung des Statorkerns Drahtschlitze in den Statornuten mit derselben Radiusgröße eine Drahtschlitzlage (140) bilden;

die Wicklung eine Dreiphasenwicklung umfasst, die Dreiphasenwicklung in verschiedenen Statornutgruppen in der Umfangsrichtung des Statorkerns aufeinander abfolgend und abwechselnd gewickelt ist und die Dreiphasenwicklung ferner in Drahtschlitzlagen aufeinander abfolgend gewickelt ist; und jede Phasenwicklung mindestens einen Zweig (240) umfasst, der mindestens eine Zweig eine Vielzahl in Reihe geschalteter U-förmiger Drähte (250) umfasst, jeder U-förmige Draht ein Biegungsende (252) umfasst, zwischen zwei in Reihe geschalteten U-förmigen Drähten ein Schweißende (254) gebildet ist und das Biegungsende und das Schweißende zwischen den Statornutgruppen abwechselnd geschaltet und auch zwischen den Drahtschlitzlagen abwechselnd geschaltet sind; und

es sich bei den allen zwischen denselben zwei benachbarten Drahtschlitzlagen geschalteten Enden um Biegungsenden der U-förmigen Drähte oder um Schweißenden zwischen den U-förmigen Drähten handelt, und **dadurch gekennzeichnet, dass**

die zwischen denselben zwei benachbarten Drahtschlitzlagen geschalteten Biegungsenden eine gleiche Form und eine gleiche Spannweite aufweisen und die zwischen denselben zwei benachbarten Drahtschlitzlagen geschalteten Schweißenden sowohl eine gleiche Spannweite als auch einen gleichen Verdrehungswinkel aufweisen.

2. Motorstator nach Anspruch 1, wobei die Spannweiten von zwischen zwei benachbarten Drahtschlitzlagen geschalteten Biegungsenden jeweils einen vollen Wicklungsschritt betragen und die Spannweiten von zwischen zwei benachbarten Drahtschlitzlagen geschalteten Schweißenden jeweils einen vollen Wicklungsschritt betragen.

3. Motorstator nach Anspruch 1 oder 2, wobei die drei benachbarten Statornuten in jeder Statornutgruppe aufeinander abfolgend drei Phasenbandabschnitte bilden; die Drahtschlitzlage eine Nutöffnungslage mit der kleinsten Radiusgröße und eine Nutbodenlage mit der größten Radiusgröße umfasst; und der Zweig ferner zwischen Statornutgruppen in der Nutöffnungslage geschaltet ist und der Zweig verschiedene Phasenbandabschnitte zwischen zwei Statornutgruppen miteinander verschaltet, und/oder

der Zweig ferner zwischen Statornutgruppen in der Nutbodenlage geschaltet ist und der Zweig verschiedene Phasenbandabschnitte zwischen zwei Statornutgruppen miteinander verschaltet.

4. Motorstator nach Anspruch 3, wobei jede Phasenwicklung einen Nutwechselabschnitt umfasst, der Nutwechselabschnitt zwischen den Statornutgruppen in der Nutöffnungslage geschaltet ist und der Nutwechselabschnitt ferner zwischen den Statornutgruppen in der Nutbodenlage geschaltet ist; und

der Nutwechselabschnitt drei Pfade umfasst und jeder Zweig in der Phasenwicklung ein Wechseln der Phasenbandabschnitte zwischen zwei Statornutgruppen über unterschiedliche Spannweitenkombinationen der drei Pfade umsetzt.

5. Motorstator nach Anspruch 4, wobei eine Spannweitenkombination der drei Pfade im Nutwechselabschnitt 10/10/7 oder 8/8/11 ist.

6. Motorstator nach Anspruch 4 oder 5, wobei eine Spannweitenkombination von drei Pfaden in einem in der Nutbodenlage befindlichen Nutwechselabschnitt die gleiche ist wie eine Spannweitenkombination von drei Pfaden in einem in der Nutöffnungslage befindlichen Nutwechselabschnitt.

7. Motorstator nach Anspruch 3, wobei die Phasenwicklung einen ersten Nutwechseldraht und einen zweiten Nutwechseldraht umfasst, der erste Nutwechseldraht zwischen Statornuten in der Nutöffnungslage geschaltet ist und der zweite Nutwechseldraht zwischen Statornuten in der Nutbodenlage geschaltet ist und sowohl der erste Nutwechseldraht als auch der zweite Nutwechseldraht dazu ausgelegt ist, ein Wechseln des Phasenbandabschnitts eines jeden Zweigs in der Phasenwicklung umzusetzen.

8. Motorstator nach Anspruch 7, wobei die ersten Nutwechseldrähte eine gleiche Spannweite aufweisen, und/oder die zweiten Nutwechseldrähte eine gleiche Spannweite aufweisen.

9. Motorstator nach einem der Ansprüche 3 bis 8, wobei die Anzahl der Drahtschlitzlagen eine gerade Zahl ist und der Zweig sowohl in der Nutöffnungslage als auch in der Nutbodenlage zwischen verschiedenen Statornuten unter Verwendung des Biegungsendes des U-förmigen Drahtes geschaltet ist; oder

die Anzahl der Drahtschlitzlagen eine ungerade Zahl ist, der Zweig in der Nutöffnungslage zwischen verschiedenen Statornuten unter Verwendung des Biegungsende des U-förmigen Drahts geschaltet, und der Zweig in der Nutbodenlage zwischen verschiedenen Statornuten durch Verwendung des Schweißendes geschaltet ist; oder der Zweig in der Nutöffnungslage zwischen verschiedenen Statornuten unter Verwendung des Schweißendes geschaltet ist und der Zweig in der Nutbodenlage zwischen verschiedenen Statornuten unter Verwendung des Biegungsendes des U-förmigen Drahts geschaltet ist.

**10.** Motor (400), umfassend einen Motorrotor (410) und den Motorstator (300) nach einem der Ansprüche 1 bis 9, wobei sich der Motorrotor auf einer Innenseite des Motorstators befindet.

**11.** Fahrzeug, umfassend mindestens den Motor (400) nach Anspruch 10.

**Revendications**

**1.** Stator de moteur (300), comprenant un noyau de stator (100) et un enroulement (200), dans lequel

le noyau de stator est en forme de cylindre et comprend une paroi interne (110) et une pluralité de fentes de stator (130) disposées sur la paroi interne, la pluralité de fentes de stator étant réparties uniformément dans une direction circonférentielle de la paroi interne, et toutes les trois fentes de stator adjacentes forment un groupe de fentes de stator (150) ;

dans une direction radiale du noyau de stator, une pluralité de fentes pour fils (133) sont disposées dans chaque fente de stator, et les tailles de rayon entre un centre de cercle du noyau de stator et les fentes pour fils dans chaque fente de stator sont différentes ; et dans une direction circonférentielle du noyau de stator, des fentes pour fils ayant une même taille de rayon dans les fentes de stator forment une couche de fentes pour fils (140) ;

l'enroulement comprend un enroulement triphasé, l'enroulement triphasé est enroulé séquentiellement et alternativement dans différents groupes de fentes de stator dans la direction circonférentielle du noyau de stator, et l'enroulement triphasé est également enroulé séquentiellement dans des couches de fentes pour fils ; et chaque enroulement de phase comprend au moins une branche (240), l'au moins une branche comprend une pluralité de fils en forme de U (250) connectés en série, chaque fil en forme de U comprend une extrémité de courbure (252), une extrémité de soudage (254) est formée entre deux fils en forme de U connectés en série, et l'extrémité de courbure et l'extrémité de soudage sont connectées en alternance entre les groupes de fentes de stator, et sont également connectées en alternance entre les couches de fentes pour fils ; et les extrémités connectées entre les mêmes deux couches de fentes pour fils adjacentes sont toutes des extrémités de courbure des fils en forme de U ou toutes sont des extrémités de soudage entre les fils en forme de U, et **caractérisé en ce que**

les extrémités de courbure connectées entre les mêmes deux couches de fentes pour fils adjacentes ont une même forme et une même envergure, et les extrémités de soudage connectées entre les mêmes deux couches de fentes pour fils adjacentes ont à la fois une même envergure et un même angle de torsion.

**2.** Stator de moteur selon la revendication 1, dans lequel les étendues d'extrémités de courbure qui sont connectées entre deux couches de fentes pour fils adjacentes ont chacune un pas complet, et les étendues d'extrémités de soudage qui sont connectées entre deux couches de fentes pour fil adjacentes ont chacune un pas complet.

**3.** Stator de moteur selon la revendication 1 ou 2, dans lequel les trois fentes de stator adjacentes dans chaque groupe de fentes de stator forment séquentiellement trois sections de bande de phase ; la couche de fentes pour fils comprend une couche d'ouverture de fente ayant une taille de rayon la plus petite et une couche inférieure de fente ayant une taille de rayon la plus grande ; et la branche est également connectée entre des groupes de fentes de stator dans la couche d'ouverture de fente, et la branche connecte différentes sections de bande de phase entre deux groupes de fentes de stator, et/ou la branche est également connectée entre des groupes de fentes de stator dans la couche inférieure de fente, et la branche connecte différentes sections de bande de phase entre deux groupes de fentes de stator.

**4.** Stator de moteur selon la revendication 3, dans lequel chaque enroulement de phase comprend une section de changement de fente, la section de changement de fente est connectée entre les groupes de fentes de stator dans la couche d'ouverture de fente, et la section de changement de fente est également connectée entre les groupes de fentes de stator dans la couche inférieure de fente ; et

la section de changement de fente comprend trois chemins, et chaque branche dans l'enroulement de phase met en oeuvre une commutation de section de bande de phase entre deux groupes de fentes de stator par l'intermédiaire de différentes combinaisons d'envergure des trois chemins.

5. Stator de moteur selon la revendication 4, dans lequel une combinaison d'envergures des trois chemins dans la section de changement de fente est 10/10/7 ou 8/8/11.

6. Stator de moteur selon la revendication 4 ou 5, dans lequel une combinaison d'envergures de trois chemins dans une section de changement de fente située dans la couche inférieure de fente est la même qu'une combinaison d'envergures de trois chemins dans une section de changement de fente située dans la couche d'ouverture de fente.

7. Stator de moteur selon la revendication 3, l'enroulement de phase comprend un premier fil de changement de fente et un second fil de changement de fente, le premier fil de changement de fente est connecté entre les fentes de stator dans la couche d'ouverture de fente, le second fil de changement de fente est connecté entre des fentes de stator dans la couche inférieure de fente, et le premier fil de changement de fente et le second fil de changement de fente sont tous deux configurés pour mettre en oeuvre une commutation de section de bande de phase de chaque branche dans l'enroulement de phase.

8. Stator de moteur selon la revendication 7, dans lequel les premiers fils de changement de fente ont une même envergure, et/ou
les seconds fils de changement de fente ont la même envergure.

9. Stator de moteur selon l'une quelconque des revendications 3 à 8, dans lequel une quantité de couches de fentes pour fils est un nombre pair, et la branche est connectée entre différentes fentes de stator dans la couche d'ouverture de fente et la couche inférieure de fente en utilisant l'extrémité de courbure du fil en forme de U ; ou la quantité de couches de fentes pour fils est un nombre impair, la branche est connectée entre différentes fentes de stator dans la couche d'ouverture de fente à l'aide de l'extrémité de courbure du fil en forme de U, et la branche est connectée entre différentes fentes de stator dans la couche inférieure de fente en utilisant l'extrémité de soudage ; ou la branche est connectée entre différentes fentes de stator dans la couche d'ouverture de fente à l'aide de l'extrémité de soudage, et la branche est connectée entre différentes fentes de stator dans la couche inférieure de fente à l'aide de l'extrémité de courbure du fil en forme de U.

10. Moteur (400), comprenant un rotor de moteur (410) et le stator de moteur (300) selon l'une quelconque des revendications 1 à 9, dans lequel le rotor de moteur est situé sur un côté interne du stator de moteur.

11. Véhicule comprenant le moteur (400) selon la revendication 10.

FIG. 1

FIG. 2

FIG. 3

FIG. 4

FIG. 5

FIG. 6

210

240
240
240

FIG. 7

EP 4 135 165 B1

| Slot | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 | 32 | 33 | 34 | 35 | 36 | 37 | 38 | 39 | 40 | 41 | 42 | 43 | 44 | 45 | 46 | 47 |
|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|
| **Layer** 1 | U+ | U+ | U+ | V- | V- | V- | W+ | W+ | W+ | U- | U- | U- | V+ | V+ | V+ | W- | W- | W- | U+ | U+ | U+ | V- | V- | V- | W+ | W+ | W+ | U- | U- | U- | V+ | V+ | V+ | W- | W- | W- | U+ | U+ | U+ | V- | V- | V- | W+ | W+ | W+ | U- | U- |
| 2 | U+ | U+ | U+ | V- | V- | V- | W+ | W+ | W+ | U- | U- | U- | V+ | V+ | V+ | W- | W- | W- | U+ | U+ | U+ | V- | V- | V- | W+ | W+ | W+ | U- | U- | U- | V+ | V+ | V+ | W- | W- | W- | U+ | U+ | U+ | V- | V- | V- | W+ | W+ | W+ | U- | U- |
| 3 | U+ | U+ | U+ | V- | V- | V- | W+ | W+ | W+ | U- | U- | U- | V+ | V+ | V+ | W- | W- | W- | U+ | U+ | U+ | V- | V- | V- | W+ | W+ | W+ | U- | U- | U- | V+ | V+ | V+ | W- | W- | W- | U+ | U+ | U+ | V- | V- | V- | W+ | W+ | W+ | U- | U- |
| 4 | U+ | U+ | U+ | V- | V- | V- | W+ | W+ | W+ | U- | U- | U- | V+ | V+ | V+ | W- | W- | W- | U+ | U+ | U+ | V- | V- | V- | W+ | W+ | W+ | U- | U- | U- | V+ | V+ | V+ | W- | W- | W- | U+ | U+ | U+ | V- | V- | V- | W+ | W+ | W+ | U- | U- |
| 5 | U+ | U+ | U+ | V- | V- | V- | W+ | W+ | W+ | U- | U- | U- | V+ | V+ | V+ | W- | W- | W- | U+ | U+ | U+ | V- | V- | V- | W+ | W+ | W+ | U- | U- | U- | V+ | V+ | V+ | W- | W- | W- | U+ | U+ | U+ | V- | V- | V- | W+ | W+ | W+ | U- | U- |
| 6 | U+ | U+ | U+ | V- | V- | V- | W+ | W+ | W+ | U- | U- | U- | V+ | V+ | V+ | W- | W- | W- | U+ | U+ | U+ | V- | V- | V- | W+ | W+ | W+ | U- | U- | U- | V+ | V+ | V+ | W- | W- | W- | U+ | U+ | U+ | V- | V- | V- | W+ | W+ | W+ | U- | U- |
| 7 | U+ | U+ | U+ | V- | V- | V- | W+ | W+ | W+ | U- | U- | U- | V+ | V+ | V+ | W- | W- | W- | U+ | U+ | U+ | V- | V- | V- | W+ | W+ | W+ | U- | U- | U- | V+ | V+ | V+ | W- | W- | W- | U+ | U+ | U+ | V- | V- | V- | W+ | W+ | W+ | U- | U- |
| 8 | U+ | U+ | U+ | V- | V- | V- | W+ | W+ | W+ | U- | U- | U- | V+ | V+ | V+ | W- | W- | W- | U+ | U+ | U+ | V- | V- | V- | W+ | W+ | W+ | U- | U- | U- | V+ | V+ | V+ | W- | W- | W- | U+ | U+ | U+ | V- | V- | V- | W+ | W+ | W+ | U- | U- |

142

140

141

150 130

FIG. 8

FIG. 9

FIG. 10

FIG. 11

EP 4 135 165 B1

FIG. 12

FIG. 13

FIG. 14

FIG. 15

FIG. 16

FIG. 17

FIG. 18

FIG. 19

242

241

260

100

260

141

FIG. 20

200

100

140

FIG. 21

FIG. 22

FIG. 23

FIG. 24

FIG. 25

FIG. 26

FIG. 27

FIG. 28

FIG. 29

FIG. 30

FIG. 31

FIG. 32

EP 4 135 165 B1

FIG. 33

51

FIG. 34

FIG. 35

FIG. 36

FIG. 37

FIG. 38

FIG. 39

**EP 4 135 165 B1**

**REFERENCES CITED IN THE DESCRIPTION**

**Patent documents cited in the description**

- CN 111181264 A
- CN 111555509 A
- CN 213585303 U